(19) **Europäisches Patentamt / European Patent Office / Office européen des brevets**

(11) **EP 4 651 396 A1**

(12) **EUROPEAN PATENT APPLICATION**
published in accordance with Art. 153(4) EPC

(43) Date of publication:
**19.11.2025 Bulletin 2025/47**

(21) Application number: **23916338.9**

(22) Date of filing: **12.01.2023**

(51) International Patent Classification (IPC):
**H04B 7/06** (2006.01)  **H04B 7/0417** (2017.01)
**H04L 1/00** (2006.01)  **G06N 3/0455** (2023.01)

(52) Cooperative Patent Classification (CPC):
**G06N 3/0455; H04B 7/0417; H04B 7/06; H04L 1/00**

(86) International application number:
**PCT/KR2023/000571**

(87) International publication number:
**WO 2024/150853 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **LG Electronics Inc.**
**Yeongdeungpo-gu**
**Seoul 07336 (KR)**

(72) Inventors:
• **JO, Minseok**
  **Seoul 06772 (KR)**
• **LEE, Sangrim**
  **Seoul 06772 (KR)**
• **KIM, Bonghoe**
  **Seoul 06772 (KR)**
• **LEE, Kyungho**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD FOR REPORTING CHANNEL STATE IN WIRELESS COMMUNICATION SYSTEM, AND APPARATUS THEREFOR**

(57)    The present disclosure provides a method of reporting channel state information (CSI) in a wireless communication system. More specifically, the method performed by a user equipment (UE) includes receiving configuration information related to a CSI report from a base station; receiving a channel state information-reference signal (CSI-RS) from the base station; performing, with the base station, a procedure for determining a number of at least one information stream related to the CSI report, each of the at least one information stream including a CSI parameter; and transmitting the CSI to the base station. The CSI is transmitted based on an information stream as many as the determined number. Based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report includes determining the number of the at least one information stream related to the CSI report, and transmitting information on the determined number to the base station. The information on the determined number includes information on a specific information stream scope within the at least one second information stream.

EP 4 651 396 A1

【FIG. 27】

```
                           ( Start )
                               │
                               ▼
┌──────────────────────────────────────────────────┐
│     Receive configuration information related to   │ ─── S2710
│           CSI report from base station             │
└──────────────────────────────────────────────────┘
                               │
                               ▼
┌──────────────────────────────────────────────────┐
│  Receive channel state information-reference signal│ ─── S2720
│            (CSI-RS) from base station              │
└──────────────────────────────────────────────────┘
                               │
                               ▼
┌──────────────────────────────────────────────────┐
│ Perform procedure for determining the number of information │ ─── S2730
│     streams related to CSI report with base station │
└──────────────────────────────────────────────────┘
                               │
                               ▼
┌──────────────────────────────────────────────────┐
│            Transmit CSI to base station            │ ─── S2740
└──────────────────────────────────────────────────┘
                               │
                               ▼
                           ( End )
```

## Description

[Technical Field]

The present disclosure relates to a wireless communication system, and more particularly to a method and a device for performing a channel state report in a wireless communication system.

[Background Art]

Wireless communication systems have been widely deployed to provide various types of communication services such as voice or data. In general, the wireless communication system is a multiple access system capable of supporting communication with multiple users by sharing available system resources (bandwidth, transmission power, etc.). Examples of multiple access systems include a Code Division Multiple Access (CDMA) system, a Frequency Division Multiple Access (FDMA) system, a Time Division Multiple Access (TDMA) system, a Space Division Multiple Access (SDMA) system, an Orthogonal Frequency Division Multiple Access (OFDMA) system, a Single Carrier Frequency Division Multiple Access (SC-FDMA) system, and an Interleave Division Multiple Access (IDMA) system.

[Disclosure]

[Technical Problem]

An object of the present disclosure is to provide a method and a device for performing a channel state report in a wireless communication system.
An object of the present disclosure is to provide a method and a device for configuring the number of data streams for a channel state report in a wireless communication system.
The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

The present disclosure provides a method and a device for performing a channel state report in a wireless communication system.
More specifically, the present disclosure provides a method of reporting, by a user equipment (UE), channel state information (CSI) in a wireless communication system. The method comprises receiving configuration information related to a CSI report from a base station; receiving a channel state information-reference signal (CSI-RS) from the base station; performing, with the base station, a procedure for determining a number of at least one information stream related to the CSI report, each of the at least one information stream including a CSI parameter; and transmitting the CSI to the base station. The CSI is transmitted based on an information stream as many as the determined number. Based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises determining the number of the at least one information stream related to the CSI report; and transmitting information on the determined number to the base station. The information on the determined number includes information on a specific information stream scope within the at least one second information stream.
The information on the specific information stream scope may include, within multiple information streams, (i) information on an information stream related to a start location of the specific information stream scope and (ii) information on an information stream related to an end location of the specific information stream scope.
An information stream included in the specific information stream scope among the at least one second information stream within the at least one second information stream may be included in the information stream as many as the determined number.
Among the at least one first information stream within the at least one first information stream, information streams from (i) a first information stream of the at least one first information stream to (ii) a previous information stream of an information stream corresponding to the information on the information stream related to the start location of the specific information stream scope may be included in the information stream as many as the determined number.
A number of the at least one first information stream may be the same as a number of the at least one second information stream.

The weighted sum for the information stream as many as the determined number may be performed by the base station.

Transmitting the CSI may comprise transmitting, to the base station, first CSI generated based on some information streams of information streams generated as many as the determined number of the at least one information stream; and transmitting, to the base station, second CSI generated based on all or some of remaining information streams excluding the some information streams from the information streams generated as many as the determined number of the at least one information stream.

The first CSI may be generated by performing a weighted sum on the some information streams, and the second CSI may be generated by performing a weighted sum on all or some of the remaining information streams excluding the some information streams from the information streams generated as many as the determined number of the at least one information stream.

Performing the procedure for determining the number of the at least one information stream related to the CSI report may comprise receiving the information on the determined number from the base station.

The CSI parameter may be a value by compressing a channel measured by the UE through an encoder neural network of the UE.

A user equipment (UE) reporting channel state information (CSI) in a wireless communication system according to the present disclosure comprises a transmitter transmitting a radio signal; a receiver receiving the radio signal; at least one processor; and at least one computer memory operably connectable to the at least one processor and storing instructions performing operations based on being executed by the at least one processor. The operations comprise receiving configuration information related to a CSI report from a base station; receiving a channel state information-reference signal (CSI-RS) from the base station; performing, with the base station, a procedure for determining a number of at least one information stream related to the CSI report, each of the at least one information stream including a CSI parameter; and transmitting the CSI to the base station. The CSI is transmitted based on an information stream as many as the determined number. Based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises determining the number of the at least one information stream related to the CSI report; and transmitting information on the determined number to the base station. The information on the determined number includes information on a specific information stream scope within the at least one second information stream.

A method of receiving, by a base station, channel state information (CSI) in a wireless communication system according to the present disclosure comprises transmitting configuration information related to a CSI report to a user equipment (UE); transmitting a channel state information-reference signal (CSI-RS) to the UE; performing, with the UE, a procedure for determining a number of at least one information stream related to the CSI report; and receiving the CSI from the UE. The CSI is transmitted based on an information stream as many as the determined number. Based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises receiving, from the UE, information on the number of the at least one information stream related to the CSI report determined by the UE. Information on the determined number includes information on a specific information stream scope within the at least one second information stream.

A base station receiving channel state information (CSI) in a wireless communication system according to the present disclosure comprises a transmitter transmitting a radio signal; a receiver receiving the radio signal; at least one processor; and at least one computer memory operably connectable to the at least one processor and storing instructions performing operations based on being executed by the at least one processor. The operations comprise transmitting configuration information related to a CSI report to a user equipment (UE); transmitting a channel state information-reference signal (CSI-RS) to the UE; performing, with the UE, a procedure for determining a number of at least one information stream related to the CSI report; and receiving the CSI from the UE. The CSI is transmitted based on an information stream as many as the determined number. Based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises receiving, from the UE, information on the number of the at least one information stream related to the CSI report determined by the UE. Information on the determined number includes information on a specific information stream scope within the at least one second information stream.

In a non-transitory computer readable medium (CRM) according to the present disclosure storing one or more instructions, the one or more instructions executable by one or more processors allow a user equipment (UE) to receive configuration information related to a CSI report from a base station; receive a channel state information-reference signal (CSI-RS) from the base station; perform, with the base station, a procedure for determining a number of at least one information stream related to the CSI report, each of the at least one information stream including a CSI parameter; and transmit the CSI to the base station. The CSI is transmitted based on an information stream as many as the determined number.

Based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises determining the number of the at least one information stream related to the CSI report; and transmitting information on the determined number to the base station. The information on the determined number includes information on a specific information stream scope within the at least one second information stream.

A device according to the present disclosure includes one or more memories and one or more processors operably connected to the one or more memories.

The one or more processors allow the device to receive configuration information related to a CSI report from a base station; receive a channel state information-reference signal (CSI-RS) from the base station; perform, with the base station, a procedure for determining a number of at least one information stream related to the CSI report, each of the at least one information stream including a CSI parameter; and transmit the CSI to the base station.

The CSI is transmitted based on an information stream as many as the determined number. Based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises determining the number of the at least one information stream related to the CSI report; and transmitting information on the determined number to the base station. The information on the determined number includes information on a specific information stream scope within the at least one second information stream.

[Advantageous Effects]

The present disclosure has an effect of performing a channel state report in a wireless communication system.

The present disclosure has an effect of appropriately determining the number of data streams for reporting channel state information in a wireless communication system.

The present disclosure has an effect of appropriately managing a feedback transmission rate when reporting channel state information in a wireless communication system.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[Description of Drawings]

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 illustrates an example of a communication system applicable to the present disclosure.

FIG. 2 illustrates an example of a wireless apparatus applicable to the present disclosure.

FIG. 3 illustrates a method of processing a transmitted signal applicable to the present disclosure.

FIG. 4 illustrates another example of a wireless device applicable to the present disclosure.

FIG. 5 illustrates an example of a hand-held device applicable to the present disclosure.

FIG. 6 illustrates physical channels applicable to the present disclosure and a signal transmission method using the same.

FIG. 7 illustrates the structure of a radio frame applicable to the present disclosure.

FIG. 8 illustrates a slot structure applicable to the present disclosure.

FIG. 9 illustrates an example of a communication structure providable in a 6G system applicable to the present disclosure.

FIG. 10 illustrates an example of CSI network architecture.

FIG. 11 illustrates an example of processing a CSI matrix in a neural network for channel state information feedback.

FIG. 12 illustrates an example of CSI network architecture.

FIGS. 13 and 14 illustrate another example of CSI network architecture.

FIGS. 15 and 16 illustrate structural features of an encoder neural network constituting ABC-Net.

FIGS. 17 and 18 illustrate an example of ABC-Net.

FIG. 19 illustrates a learning situation where weights can be trained as learnable parameters.

FIG. 20 illustrates an example of a CSI feedback procedure.

FIG. 21 illustrates an example of a CSI feedback procedure when an alpha layer exists in a UE.

FIG. 22 illustrates an example of a CSI feedback procedure when a UE determines a feedback rate for CSI feedback.

FIG. 23 illustrates an example of a CSI feedback procedure when a UE determines a feedback rate for CSI feedback and an alpha layer exists in the UE.

FIG. 24 illustrates an example of a CSI feedback procedure when feedback is dividedly transmitted multiple times.

FIG. 25 illustrates an example of a CSI feedback procedure when an alpha layer exists in a UE while feedback is dividedly transmitted multiple times.

FIG. 26 illustrates an example of a CSI feedback procedure when a part of a previous CSI feedback is reused for current channel estimation.

FIG. 27 is a flowchart illustrating an example where a channel state reporting method described in the present disclosure is performed by a UE.

FIG. 28 is a flowchart illustrating an example where a channel state reporting method described in the present disclosure is performed by a base station.

[Mode for Invention]

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an UpLink (UL). Likewise, the mobile station may serve as a receiver and the BS may serve as a transmitter, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

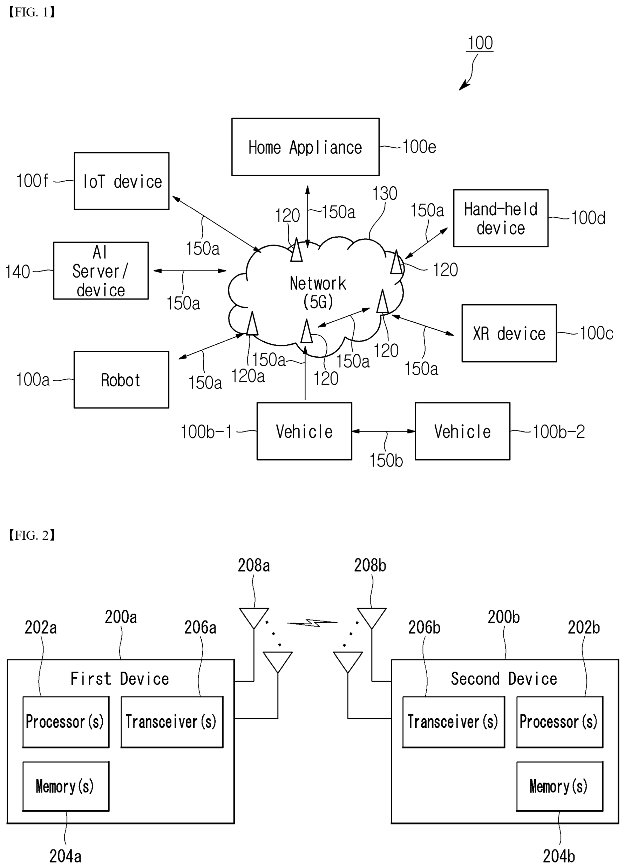

FIG. 1 illustrates an example of a communication system applicable to the present disclosure. Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

Communication system applicable to the present disclosure

FIG. 2 illustrates an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be connected with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be connected with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be connected with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be connected with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be connected with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be connected with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be connected with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be connected with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

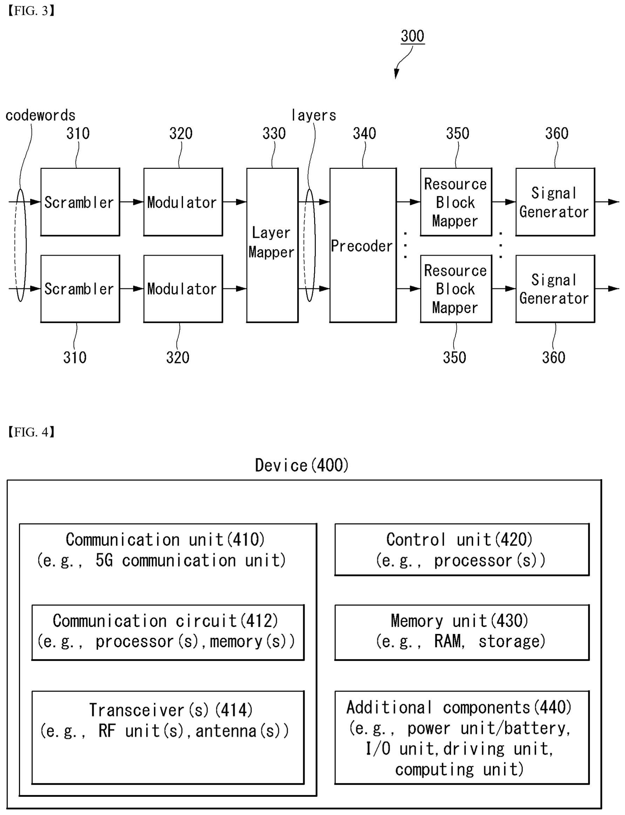

FIG. 3 illustrates a method of processing a transmitted signal applicable to the present disclosure. For example, the transmitted signal may be processed by a signal processing circuit. At this time, a signal processing circuit 1200 may include a scrambler 300, a modulator 320, a layer mapper 330, a precoder 340, a resource mapper 350, and a signal generator 360. At this time, for example, the operation/function of FIG. 3 may be performed by the processors 202a and 202b and/or the transceiver 206a and 206b of FIG. 2. In addition, for example, the hardware element of FIG. 3 may be implemented in the processors 202a and 202b of FIG. 2 and/or the transceivers 206a and 206b of FIG. 2. In addition, for example blocks 310 to 350 may be implemented in the processors 202a and 202b of FIG. 2 and a block 360 may be implemented in the transceivers 206a and 206b of FIG. 2, without being limited to the above-described embodiments.

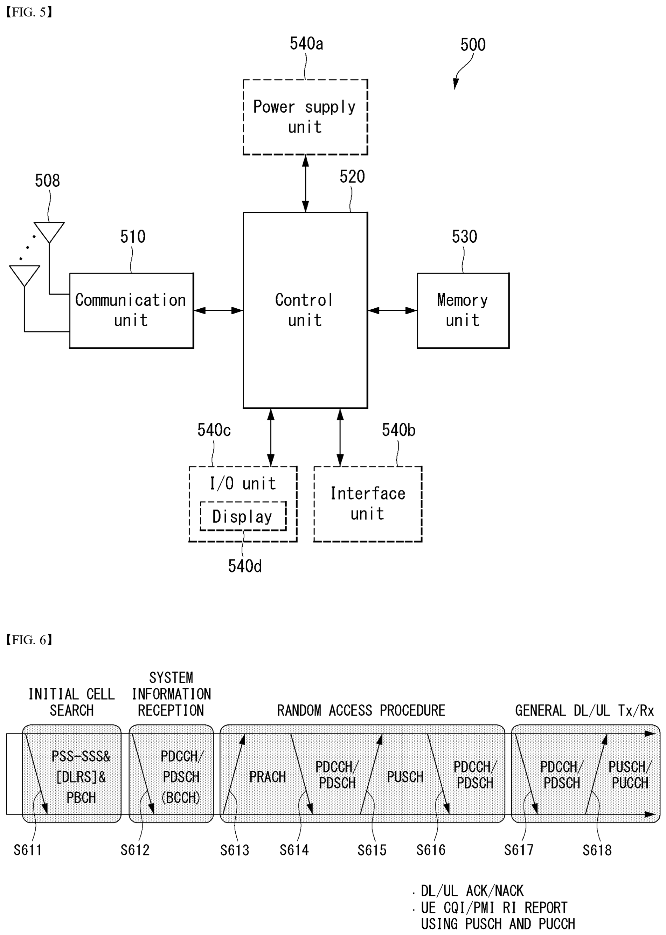

A codeword may be converted into a radio signal through the signal processing circuit 300 of FIG. 3. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH) of FIG. 6. Specifically, the codeword may be converted into a bit sequence scrambled by the scrambler 310. The scramble sequence used for scramble is generated based in an initial value and the initial value may include ID information of a wireless device, etc. The scrambled bit sequence may be modulated into a modulated symbol sequence by the modulator 320. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 330. Modulation symbols of each transport layer may be mapped to corresponding antenna port(s) by the precoder 340 (precoding). The output z of the precoder 340 may be obtained by multiplying the output y of the layer mapper 330 by an N*M precoding matrix W. Here, N may be the number of antenna ports and M may be the number of transport layers. Here, the precoder 340 may perform precoding after transform precoding (e.g., discrete Fourier transform (DFT)) for complex modulation symbols. In addition, the precoder 340 may perform precoding without performing transform precoding.

The resource mapper 350 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 360 may generate a radio signal from the mapped modulation symbols, and the generated radio signal may be transmitted to another device through each antenna. To this end, the signal generator 360 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 310 to 360 of FIG. 3. For example, the wireless device (e.g., 200a or 200b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a descrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

Structure of wireless device **applicable** to the **present** disclosure

FIG. 4 illustrates another example of a wireless device applicable to the present disclosure.

Referring to FIG. 4, a wireless device 400 may correspond to the wireless devices 200a and 200b of FIG. 2 and include various elements, components, units/portions and/or modules. For example, the wireless device 400 may include a communication unit 410, a control unit (controller) 420, a memory unit (memory) 430 and additional components 440. The communication unit may include a communication circuit 412 and a transceiver(s) 414. For example, the communication circuit 412 may include one or more processors 202a and 202b and/or one or more memories 204a and 204b of FIG. 2. For example, the transceiver(s) 414 may include one or more transceivers 206a and 206b and/or one or more antennas 208a and 208b of FIG. 2. The control unit 420 may be electrically connected with the communication unit 410, the memory unit 430 and the additional components 440 to control overall operation of the wireless device. For example, the control unit 320 may control electrical/mechanical operation of the wireless device based on a program/code/instruction/information stored in the memory unit 430. In addition, the control unit 420 may transmit the information stored in the memory unit 430 to the outside (e.g., another communication device) through the wireless/wired interface using the communication unit 410 over a wireless/wired interface or store information received from the outside (e.g., another communication device) through the wireless/wired interface using the communication unit 410 in the memory unit 430.

The additional components 440 may be variously configured according to the types of the wireless devices. For example, the additional components 440 may include at least one of a power unit/battery, an input/output unit, a driving unit or a computing unit. Without being limited thereto, the wireless device 400 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 4, various elements, components, units/portions and/or modules in the wireless device 400 may be connected with each other through wired interfaces or at least some thereof may be wirelessly connected through the communication unit 410. For example, in the wireless device 400, the control unit 420 and the communication unit 410 may be connected by wire, and the control unit 420 and the first unit (e.g., 130 or 140) may be wirelessly connected through the communication unit 410. In addition, each element, component, unit/portion and/or module of the wireless device 400 may further include one or more elements. For example, the control unit 420 may be composed of a set of one or more processors. For example, the control unit 420 may be composed of a set of a communication control processor, an application processor, an electronic control unit (ECU), a graphic processing processor, a memory control processor, etc. In another example, the memory unit 430 may be composed of a random access memory (RAM), a dynamic RAM (DRAM), a read only memory (ROM), a flash memory, a volatile memory, a non-volatile memory and/or a combination thereof.

Hand-held device **applicable** to the **present** disclosure

FIG. 5 illustrates an example of a hand-held device applicable to the present disclosure.

FIG. 5 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 5, the hand-held device 500 may include an antenna unit (antenna) 508, a communication unit (transceiver) 510, a control unit (controller) 520, a memory unit (memory) 530, a power supply unit (power supply) 540a, an interface unit (interface) 540b, and an input/output unit 540c. An antenna unit (antenna) 508 may be part of the communication unit 510. The blocks 510 to 530/540a to 540c may correspond to the blocks 410 to 430/440 of FIG. 4, respectively.

The communication unit 510 may transmit and receive signals (e.g., data, control signals, etc.) to and from other wireless devices or base stations. The control unit 520 may control the components of the hand-held device 500 to perform various operations. The control unit 520 may include an application processor (AP). The memory unit 530 may store data/parameters/program/code/instructions necessary to drive the hand-held device 500. In addition, the memory unit 430 may store input/output data/information, etc. The power supply unit 540a may supply power to the hand-held device 500 and include a wired/wireless charging circuit, a battery, etc. The interface unit 540b may support connection between the hand-held device 500 and another external device. The interface unit 540b may include various ports (e.g., an audio input/output port and a video input/output port) for connection with the external device. The input/output unit 440c may receive or output video information/signals, audio information/signals, data and/or user input information. The input/output unit 540c may include a camera, a microphone, a user input unit, a display 540d, a speaker and/or a haptic module.

For example, in case of data communication, the input/output unit 540c may acquire user input information/signal (e.g., touch, text, voice, image or video) from the user and store the user input information/signal in the memory unit 530. The communication unit 510 may convert the information/signal stored in the memory into a radio signal and transmit the converted radio signal to another wireless device directly or transmit the converted radio signal to a base station. In addition, the communication unit 510 may receive a radio signal from another wireless device or the base station and then restore the received radio signal into original information/signal. The restored information/signal may be stored in the memory unit 530 and then output through the input/output unit 540c in various forms (e.g., text, voice, image, video and haptic).

## Physical channels and general signal transmission

In a radio access system, a UE receives information from a base station on a DL and transmits information to the base station on a UL. The information transmitted and received between the UE and the base station includes general data information and a variety of control information. There are many physical channels according to the types/usages of information transmitted and received between the base station and the UE.

FIG. 5 illustrates physical channels applicable to the present disclosure and a signal transmission method using the same.

The UE which is turned on again in a state of being turned off or has newly entered a cell performs initial cell search operation in step S1011 such as acquisition of synchronization with a base station. Specifically, the UE performs synchronization with the base station, by receiving a Primary Synchronization Channel (P-SCH) and a Secondary Synchronization Channel (S-SCH) from the base station, and acquires information such as a cell Identifier (ID).

Thereafter, the UE may receive a physical broadcast channel (PBCH) signal from the base station and acquire intra-cell broadcast information. Meanwhile, the UE may receive a downlink reference signal (DL RS) in an initial cell search step and check a downlink channel state. The UE which has completed initial cell search may receive a physical downlink control channel (PDCCH) and a physical downlink control channel (PDSCH) according to physical downlink control channel information in step S612, thereby acquiring more detailed system information.

Thereafter, the UE may perform a random access procedure such as steps S613 to S616 in order to complete access to the base station. To this end, the UE may transmit a preamble through a physical random access channel (PRACH) (S613) and receive a random access response (RAR) to the preamble through a physical downlink control channel and a physical downlink shared channel corresponding thereto (S614). The UE may transmit a physical uplink shared channel (PUSCH) using scheduling information in the RAR (S615) and perform a contention resolution procedure such as reception of a physical downlink control channel signal and a physical downlink shared channel signal corresponding thereto (S616).

The UE, which has performed the above-described procedures, may perform reception of a physical downlink control channel signal and/or a physical downlink shared channel signal (S617) and transmission of a physical uplink shared channel (PUSCH) signal and/or a physical uplink control channel (PUCCH) signal (S618) as general uplink/-downlink signal transmission procedures.

The control information transmitted from the UE to the base station is collectively referred to as uplink control information (UCI). The UCI includes hybrid automatic repeat and request acknowledgement/negative-ACK (HARQ-ACK/NACK), scheduling request (SR), channel quality indication (CQI), precoding matrix indication (PMI), rank indication (RI), beam indication (BI) information, etc. At this time, the UCI is generally periodically transmitted through a PUCCH, but may be transmitted through a PUSCH in some embodiments (e.g., when control information and traffic data are simultaneously transmitted). In addition, the UE may aperiodically transmit UCI through a PUSCH according to a request/instruction of a network.

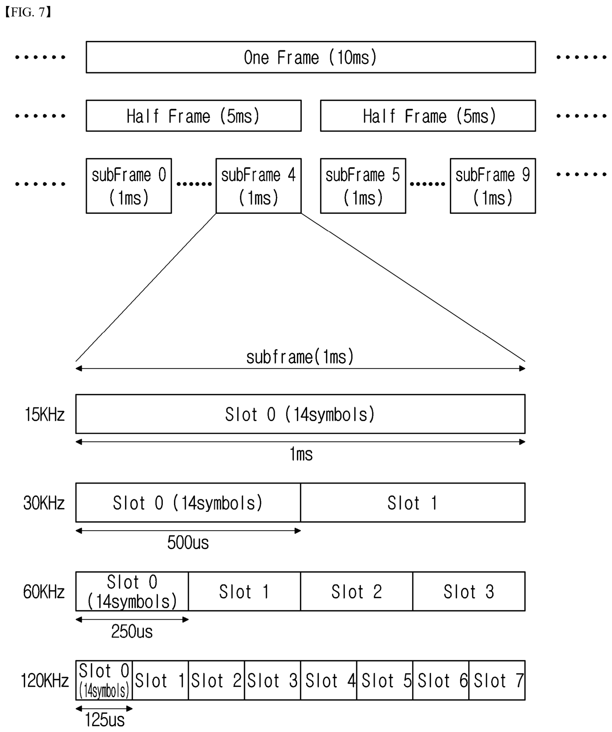

FIG. 7 illustrates the structure of a radio frame applicable to the present disclosure.

UL and DL transmission based on an NR system may be based on the frame shown in FIG. 7. At this time, one radio frame has a length of 10 ms and may be defined as two 5-ms half-frames (HFs). One half-frame may be defined as five 1-ms subframes (SFs). One subframe may be divided into one or more slots and the number of slots in the subframe may depend on subscriber spacing (SCS). At this time, each slot may include 12 or 14 OFDM(A) symbols according to cyclic prefix (CP). If normal CP is used, each slot may include 14 symbols. If an extended CP is used, each slot may include 12 symbols. Here, the symbol may include an OFDM symbol (or a CP-OFDM symbol) and an SC-FDMA symbol (or a DFT-s-OFDM symbol).

Table 1 shows the number of symbols per slot according to SCS, the number of slots per frame and the number of slots per subframe when normal CP is used, and Table 2 shows the number of symbols per slot according to SCS, the number of slots per frame and the number of slots per subframe when extended CP is used.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Table 2]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Tables 1 and 2 above, Nslotsymb may indicate the number of symbols in a slot, Nframe,μslot may indicate the number of slots in a frame, and Nsubframe,μslot may indicate the number of slots in a subframe.

In addition, in a system, to which the present disclosure is applicable, OFDM(A) numerology (e.g., SCS, CP length, etc.) may be differently set among a plurality of cells merged to one UE. Accordingly, an (absolute time) period of a time resource (e.g., an SF, a slot or a TTI) (for convenience, collectively referred to as a time unit (TU)) composed of the same number of symbols may be differently set between merged cells.

NR may support a plurality of numerologies (or subscriber spacings (SCSs)) supporting various 5G services. For example, a wide area in traditional cellular bands is supported when the SCS is 15 kHz, dense-urban, lower latency and wider carrier bandwidth are supported when the SCS is 30 kHz/60 kHz, and bandwidth greater than 24.25 GHz may be supported to overcome phase noise when the SCS is 60 kHz or higher.

An NR frequency band is defined as two types (FR1 and FR2) of frequency ranges. FR1 and FR2 may be configured as shown in the following table. In addition, FR2 may mean millimeter wave (mmW).

[Table 3]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In addition, for example, in a communication system, to which the present disclosure is applicable, the above-described numerology may be differently set. For example, a terahertz wave (THz) band may be used as a frequency band higher than FR2. In the THz band, the SCS may be set greater than that of the NR system, and the number of slots may be differently set, without being limited to the above-described embodiments. The THz band will be described below.

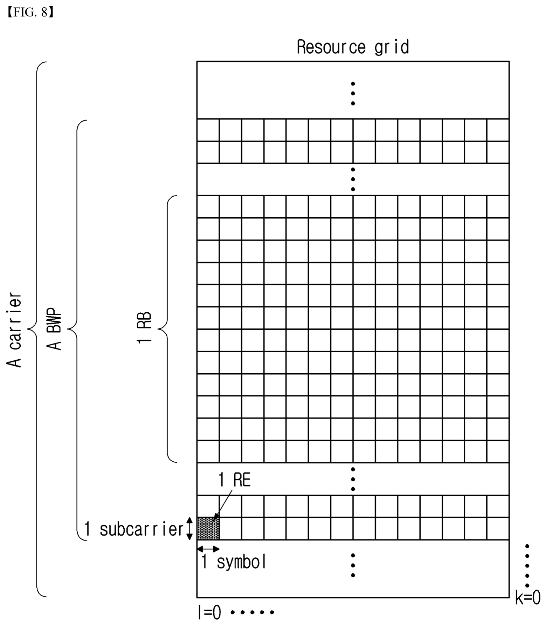

FIG. 8 illustrates a slot structure applicable to the present disclosure.

One slot includes a plurality of symbols in the time domain. For example, one slot includes seven symbols in case of normal CP and one slot includes six symbols in case of extended CP. A carrier includes a plurality of subcarriers in the frequency domain. A resource block (RB) may be defined as a plurality (e.g., 12) of consecutive subcarriers in the frequency domain.

In addition, a bandwidth part (BWP) is defined as a plurality of consecutive (P)RBs in the frequency domain and may correspond to one numerology (e.g., SCS, CP length, etc.).

The carrier may include a maximum of N (e.g., five) BWPs. Data communication is performed through an activated BWP and only one BWP may be activated for one UE. In resource grid, each element is referred to as a resource element (RE) and one complex symbol may be mapped.

## 6G communication system

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

[Table **4**]

| | |
|---|---|
| **Per device peak data rate** | 1 Tbps |
| **E2E latency** | 1 ms |
| **Maximum spectral efficiency** | 100bps/Hz |
| **Mobility support** | Up to 1000km/hr |
| **Satellite integration** | Fully |
| **AI** | Fully |
| **Autonomous vehicle** | Fully |
| **XR** | Fully |
| **Haptic Communication** | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

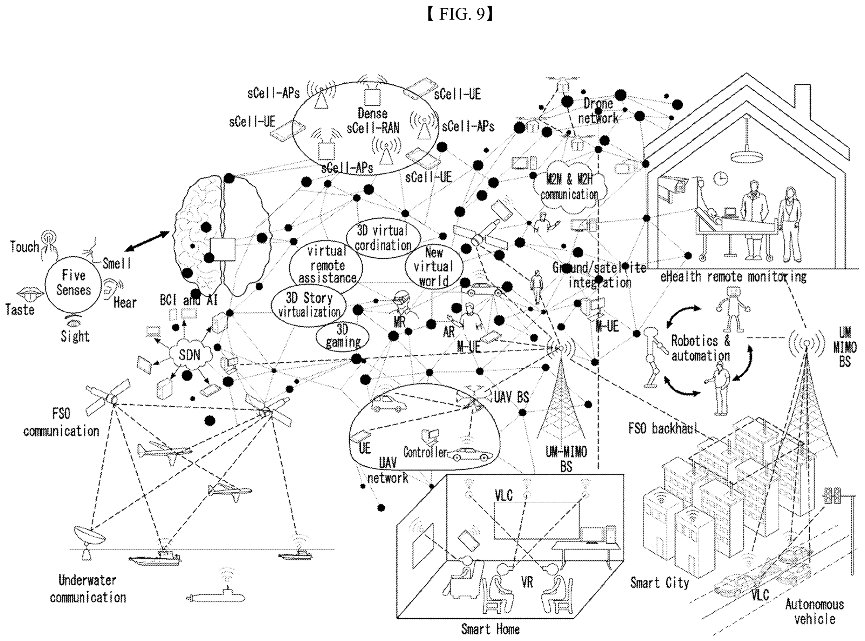

FIG. 9 illustrates an example of a communication structure providable in a 6G system applicable to the present disclosure.

Referring to FIG. 9, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.

- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

## Quantum Communication

Quantum communication is a next-generation communication technology that can overcome the limitations of existing information and communication, such as security and ultra-fast computation, by applying quantum mechanical properties to the information and communication field. The quantum communication provides a means to generate, transmit, process, and store information in the form that cannot be expressed or is difficult to express in the form of 0 and 1 according to binary bit information used in existing communication technologies. In the existing communication technologies, wavelengths, amplitudes, or the like have been used for information transmission between a transmitting end and a receiving end, but in the quantum communication, a photon, which is the smallest unit of light, is used for the information transmission between the transmitting end and the receiving end. In particular, the quantum communication can utilize quantum uncertainty, quantum irreversibility, and non-cloning for the polarization or phase difference of photons (light), and thus the quantum communication has the characteristic of enabling communication with perfect security. The quantum communication can also enable ultra-fast communication using quantum entanglement under certain conditions.

The present disclosure proposes a method of reporting channel state information (CSI) in a CSI network in which accumulable feedback signals exist. More specifically, a method described in the present disclosure relates to various signaling procedures for mutually determining between a UE and a BS how many CSI feedback streams the UE will use to perform CSI feedback on the BS in a CSI network in which accumulable feedback signals exist. Hereinafter, in the present disclosure, the "CSI network" may refer to an artificial neural network that compresses and reconstructs CSI based on deep learning.

To help understanding of the method described in the present disclosure, the general contents of a CSI network that compresses and reconstructs CSI based on deep learning are first described below.

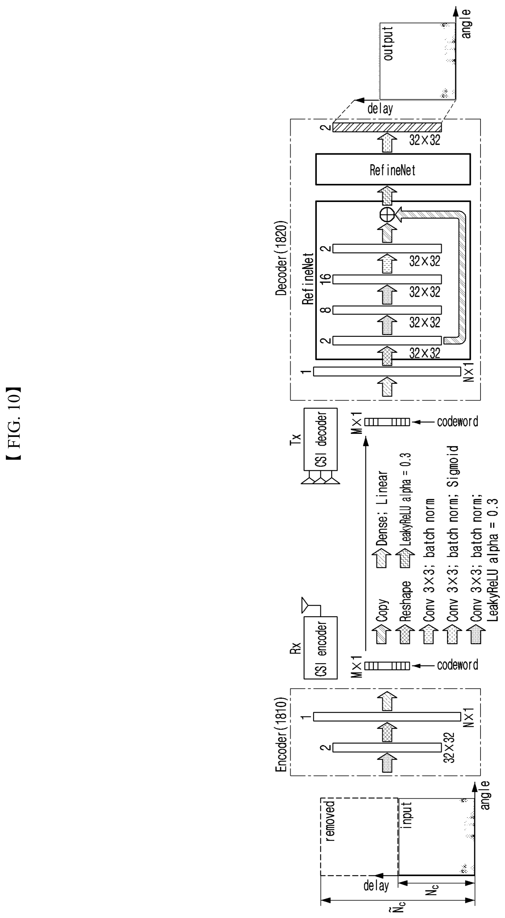

Various evolutions have been recently made to the architecture of CSI networks. FIG. 10 illustrates an example of a CSI network architecture.

Various evolutions have been recently made to the architecture of CSI networks.

FIG. 10 illustrates an example of a neural network architecture for CSI feedback. FIG. 10 illustrates CsiNet, which is an example of a CSI network architecture. Referring to FIG. 10, a CSI network may be viewed as including a CSI encoder 1810 and a CSI decoder 1820. For example, in downlink in which data transmission is performed from a base station to a UE, the base station may operate as a transmitter and the UE may operate as a receiver. In the downlink, the CSI encoder may be operated by the UE, which is a receiver, and the CSI decoder may be operated by the base station, which is a transmitter. In the present disclosure, downlink communication is assumed as an example for the convenience of explanation, but various embodiments described below are not limited to the downlink and can be applied to other links, such as uplink and sidelink.

The CSI encoder included in the UE may compress information on a channel state. The compressed information, which is an output of the CSI encoder, is transmitted to the base station through uplink feedback. The base station may input the received compressed information into the CSI decoder, and the CSI decoder may reconstruct information on a channel state of the UE. In the present disclosure, for convenience of explanation, the compressed information, which is an output of the CSI encoder and an input of the CSI decoder, may be referred to as a CSI feedback signal, CSI feedback information, or other terms having an equivalent technical meaning thereto. In the present disclosure, the CSI feedback signal may have a form of a bit stream. The bit stream means a sequence including binary digits or bits of 0 or 1, not a vector including floating point numbers.

In the present disclosure, the number of transmit (Tx) antennas of the base station is assumed to be $N_t$ and the number of receive (Rx) antennas of the UE is assumed to be 1. However, various embodiments described below are not only applicable to a single receive antenna, but can also be extended to a multi-antenna case. In addition, in the following description, an OFDM system using $N_c$ orthogonal subcarriers is considered.

A signal received by the UE through an nth subcarrier can be expressed as shown in Equation 1 below.

【Equation 1】

$$y_n = \mathbf{h}_n^H \mathbf{v}_n x_n + z_n, \quad (n = 1, 2, ..., N_c)$$

In Equation 1, $\mathbf{h}_n \in \mathbb{C}^{N_t \times 1}$ is an instantaneous channel vector in a frequency domain, $\mathbf{v}_n \in \mathbb{C}^{N_t \times 1}$ is a precoding vector, $x_n \in \mathbb{C}$ is a data symbol transmitted in downlink, $z_n \in \mathbb{C}$ is an additive white Gaussian noise (AWGN), $n$ is a subcarrier index, and $N_c$ is the number of subcarriers.

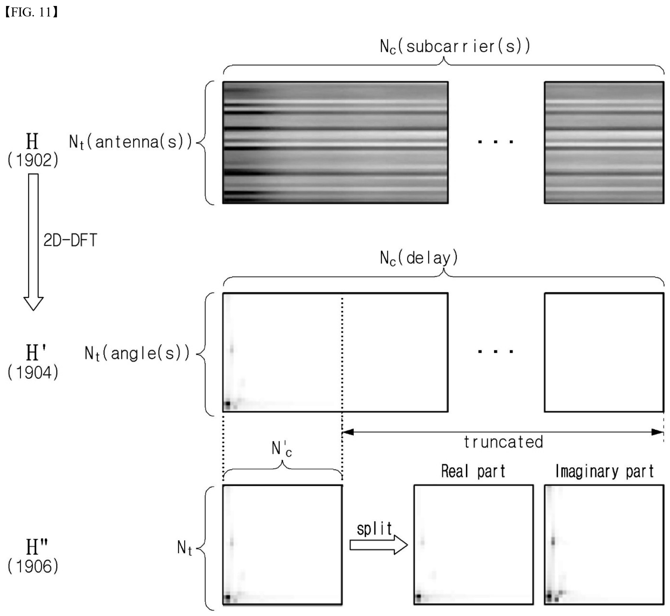

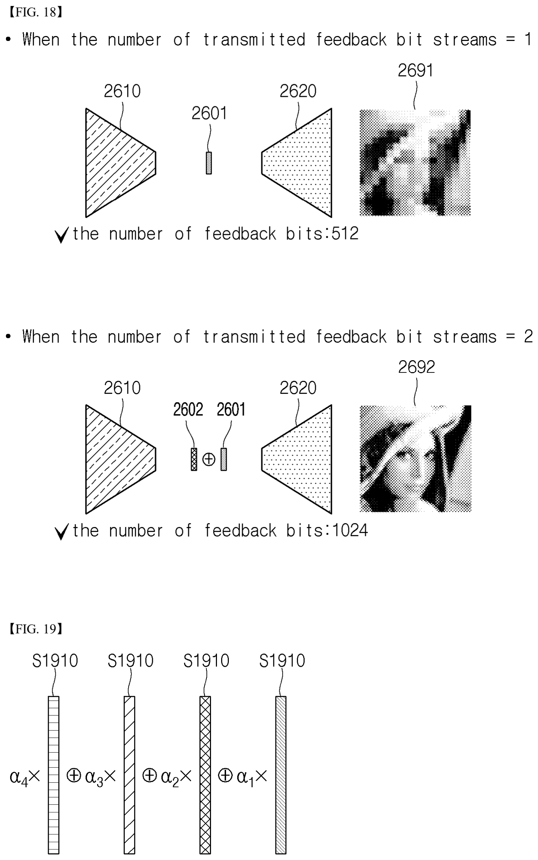

A channel vector $\mathbf{h}_n$ for an nth subcarrier may be estimated by the UE and feedback to the base station. Considering all subcarriers as a whole, a CSI matrix that can be expressed as $\mathbf{H} = [\mathbf{h}_n, \quad ..., \quad \mathbf{h}_{N_c}]^H \in \mathbb{C}^{N_c \times N_t}$ needs to be properly feedback from the UE to the base station so that the base station can correctly determine precoding vectors. A CSI matrix $\mathbf{H}$ in a spatial frequency domain may be processed as illustrated in FIG. 11 below. FIG. 11 illustrates an example of processing a CSI matrix in a neural network for channel state information feedback. FIG. 11 illustrates a matrix that is reversed in horizontal and vertical directions compared to a general way of representing a matrix. Referring to FIG. 11, preprocessing may be performed in which a two-dimensional (2D) discrete Fourier transform (DFT), truncation with respect to a delay axis in an angular-delay domain, and split into a real part and an imaginary part are sequentially performed. That is, in order to utilize the CSI network, the preprocessing including the following three steps may be performed as illustrated in FIG. 19.

(1) 2D-DFT

A CSI matrix $\mathbf{H}'$ in the angular-delay domain may be obtained from the CSI matrix $\mathbf{H}$ in the spatial-frequency domain. A relationship equation is $\mathbf{H}' = \mathbf{F}_d \mathbf{H} \mathbf{F}_a.$ $\mathbf{F}_d \in \mathbb{C}^{N_c \times N_c}$ and $\mathbf{F}_a \in \mathbb{C}^{N_t \times N_t}$ are two DFT matrixes.

(2) Truncation with respect to delay-axis

Because a time delay between multipath arrivals exists within a limited period, the time delays for all subcarriers lie within a specific period. Therefore, the CSI matrix $\mathbf{H}'$ in the angular-delay domain has large values only in the first $N'_c$ rows, and has values close to 0 in the remaining parts. Accordingly, if it takes only the first $N'_c$ rows of the CSI matrix $\mathbf{H}'$ in the angular-delay domain, $\mathbf{H}'' \in \mathbb{C}^{N'_c \times N_t}$ is obtained.

(3) Split into real part and imaginary part

In the truncated CSI matrix $\mathbf{H}'' \in \mathbb{C}^{N'_c \times N_t}$, each element of a matrix includes a complex number, but general neural networks have difficulty handling complex numbers. Therefore, for the convenience of processing in the neural network, two matrices are created by dividing the real and imaginary parts of each element, and a tensor with the size of $2 \times N'_c \times N_t$ may be constructed by stacking the two matrices in the third dimension.

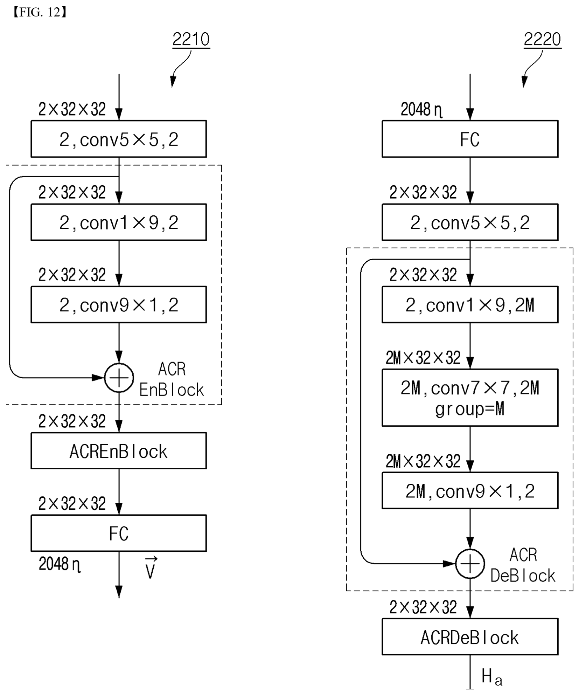

FIG. 12 illustrates an example of CSI network architecture. More specifically, FIG. 12 illustrates ACRNet architecture. ACRNet is the CSI network architecture. Referring to FIG. 12, it is confirmed that the ACRNet includes architecture called ACREnBlock, which is a type of residual block, not only in a decoder 2220 but also in an encoder 2210.

In the present disclosure, for the convenience of explanation, compressed information which is an output of a CSI encoder and an input of a CSI decoder is called a "CSI feedback signal." The present disclosure considers that the CSI feedback signal is in the form of a bit stream. The bit stream means a sequence consisting of binary digits (bits) of 0 or 1, not a vector consisting of floating point numbers. Therefore, the present disclosure considers a "CSI feedback bit stream" as the output of the encoder and the input of the decoder. However, the contents of the present disclosure are not limited to signals in the form of a bit stream. In the present disclosure, the term "added" in expressions for CSI feedback signals, such as "added before being input to the decoder NN," "added and input to the decoder NN," or "added to the decoder NN and input," may comprehensively means a weighted sum, a weighted average, etc., in addition to a summation.

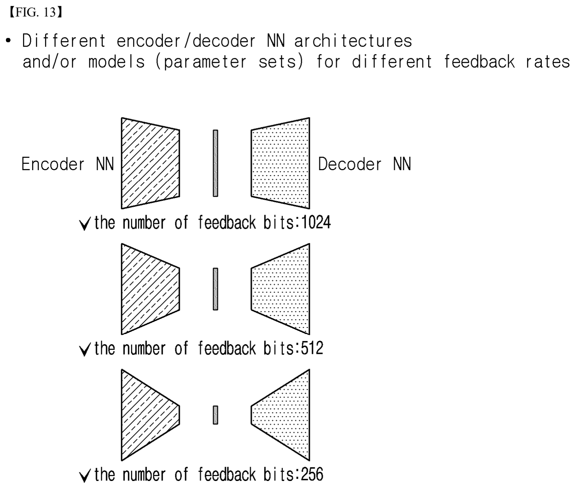

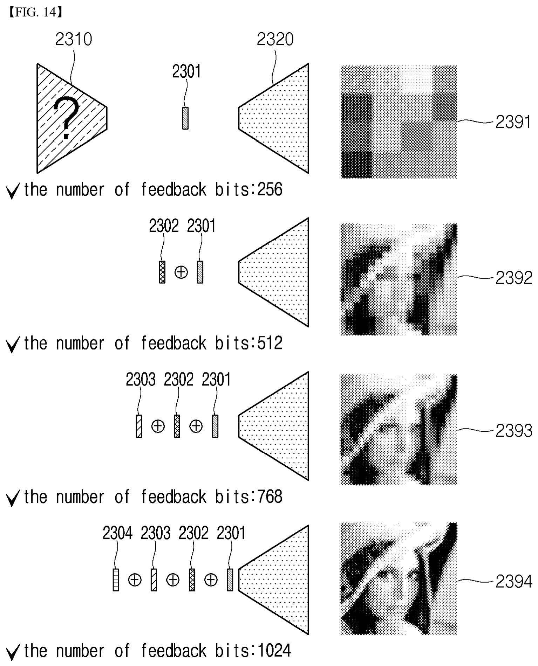

FIGS. 13 and 14 illustrate another example of CSI network architecture.

More specifically, FIGS. 13 and 14 illustrate an example of CSI feedback bit streams accumulable in a decoder. First, FIG. 13 relates to an existing general CSI network architecture and illustrates an encoder neural network, a decoder neural network, and a CSI feedback signal between the encoder neural network and the decoder neural network. FIG. 13 illustrates three cases based on the number of feedback bits. In each of the three cases, a longitudinal length of a CSI feedback bit stream may be differently expressed based on the number of transmitted feedback bits, and a length of a right side constituting the encoder neural network and a length of a left side of a green trapezoid constituting the decoder neural network may also be expressed differently. In general, in the existing CSI network architecture, since a dimension for an output of the encoder neural network and an input of the decoder neural network varies depending on a feedback transmission rate, the architectures of the encoder neural network and the decoder neural network may vary depending on the number of feedback bits as illustrated in FIG. 14.

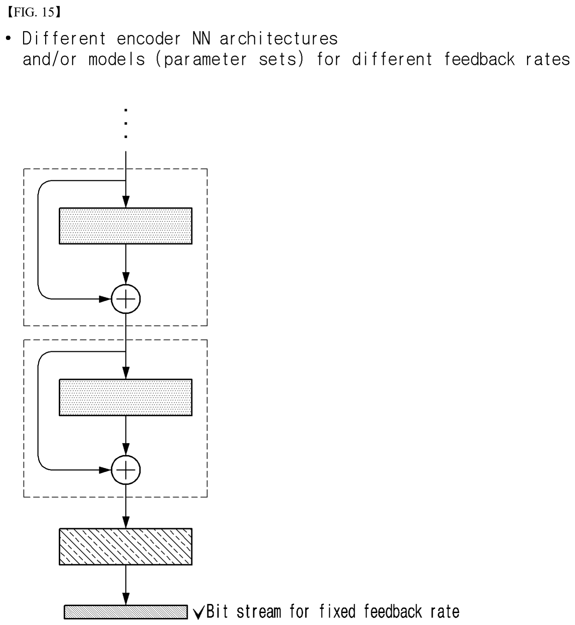

On the other hand, referring to FIG. 14, in a CSI feedback method of FIG. 14, different CSI feedback streams may be added to each other before being input to the decoder neural network of the CSI network. Therefore, an input dimension of the decoder neural network may be maintained as it is, architecture of the decoder neural network may be maintained as it is, and a model (parameter set) of the decoder neural network may also be maintained as it is. FIG. 15 illustrates that the same decoder neural network model can be always used regardless of the number of CSI feedback streams added before being input to the decoder neural network. The number of feedback bits increases in proportion to the number of CSI feedback bit streams that are added to the decoder neural network and then are input. For example, if a length of a CSI feedback bit stream that can be solely input to the decoder neural network is 256 bits, the number of CSI feedback bit streams are 2, 3, and 4, and thus the number of feedback bits increases to 512, 768, and 1024, respectively. Even if the same decoder neural network model is used, CSI reconstruction performance can be improved as the number of CSI feedback bit streams, that are added to the decoder neural network and then are input, increases. FIG. 15 illustrates that as the number of CSI feedback bit streams increases, the CSI reconstruction performance is improved by expressing that images are reconstructed at a higher resolution as in images 2391/2392/2393/2394 of FIG. 15. However, as illustrated in FIG. 15, expressing the improvement of the reconstruction performance as an example of the image is merely an example, and it may be actually difficult to recognize information such as a CSI matrix, that can be reconstructed from the CSI network, with the human eye as in the image of FIG. 15. In addition, expressing an increase in the CSI reconstruction performance as an increase in the resolution of the image is also merely an example, and it may not be possible to conclude that the CSI reconstruction performance is improved in terms of the resolution of the image. This is because, due to the characteristics of deep learning, it is difficult to explain exactly what the different CSI feedback streams, that are added to the decoder neural network and then are input, mean and what role they play as signals.

Referring again to FIG. 14, the CSI feedback streams of different roles that are added to each other before being input to the decoder neural network are represented by different symbols. Even if a CSI feedback bit stream 2301 is solely input to the decoder neural network, the CSI feedback bit stream 2301 may be a signal capable of CSI reconstruction. Only when a CSI feedback bit stream 2302 is input to the decoder neural network after the CSI feedback bit stream 2302 is added to the CSI feedback bit stream 2301, the CSI feedback bit stream 2302 may be a signal capable of CSI reconstruction.

In this instance, considering that CSI feedback bit streams of different roles may be added and then input to the decoder neural network as illustrated in FIG. 15, the CSI feedback bit streams of different roles may also be understood as CSI feedback bit streams of "different levels." As illustrated in FIG. 15, an architecture of the encoder neural network outputting CSI feedback bit streams that can be added to the decoder neural network and then input while performing different roles may be called an Accumulable feature extraction Before skip Connection Network (ABC-Net).

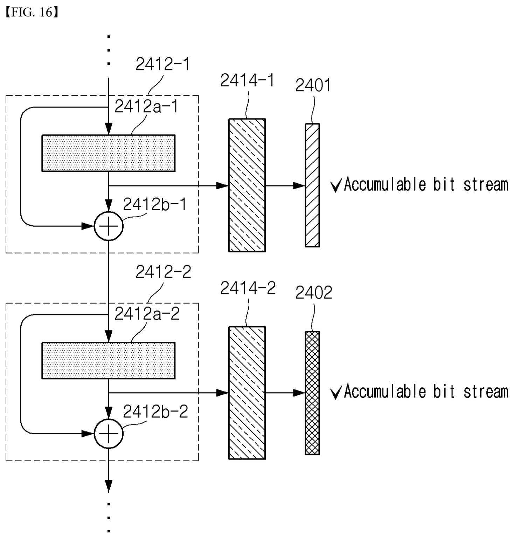

FIGS. 15 and 16 illustrate structural features of an encoder neural network constituting ABC-Net.

Referring to FIG. 15, as an output of an encoder neural network, a CSI feedback bit stream 1510 is output. In an encoder of a CSI network of FIG. 15, since an output dimension of the encoder neural network may change when a feedback rate changes, architecture of the encoder neural network itself may change. Even if the architecture of the encoder neural network does not change depending on the feedback rate, at least a model (parameter set) of the encoder neural network is generally bound to change depending on the feedback rate. This is because, in a general CSI network, a specific encoder neural network model outputs only a CSI feedback signal for a specific fixed feedback rate corresponding to the model.

Referring to FIG. 16, an encoder neural network architecture of FIG. 16 is an encoder neural network architecture that outputs CSI feedback bit streams 2401/2402 of different roles. In FIG. 16, considering that CSI feedback bit streams of different roles can be added and input to a decoder neural network, the CSI feedback bit streams of different roles may also be understood as CSI feedback bit streams of "different levels". The CSI feedback signals of different levels may be obtained from ResNet-like architecture blocks of different locations. In FIG. 16, CSI feedback signals of different levels are denoted by different reference numerals. In the proposed encoder neural network architecture of ABC-Net, in order to output the CSI feedback bit streams of different levels, a signal immediately before a skip connection of the ResNet architecture is input to a fully-connected (FC) layer to output the CSI feedback bit streams. That is, the ABC-Net architecture may be characterized in that a feature extraction is performed using a residual signal immediately before being added to an identity signal. In other words, the ABC-Net has a feature of "feature extraction before skip connection." In this instance, a feature vector extracted before skip connection is an accumulable signal in the decoder. Therefore, the feature extracted in the decoder may be understood as an accumulable feature extraction. In other words, the ABC-Net has a feature of "accumulable feature extraction before skip connection."

One of the features of the ABC-Net may be that it performs the feature extraction using the residual signal before the skip connection of an encoder neural network. This feature can be seen as an attempt to create the CSI feedback bit streams of different levels that can be added before being input to the decoder neural network. In the present disclosure, the CSI feedback bit streams of different levels that can be added before being input to the decoder neural network may be called "accumulable feedback signals." The present disclosure considers a method of operating a CSI network, such as the ABC-Net, in which the accumulable feedback signals exist. More specifically, the present disclosure considers a procedure for operating the encoder neural network and the decoder neural network when the decoder neural network exists in a BS and the encoder neural network exists in a UE. Hereinafter, for the convenience of explanation, the ABC-Net is considered as a CSI network architecture in which the accumulable feedback signals exist. However, methods described in the present disclosure is not to be interpreted as being limited to the ABC-Net.

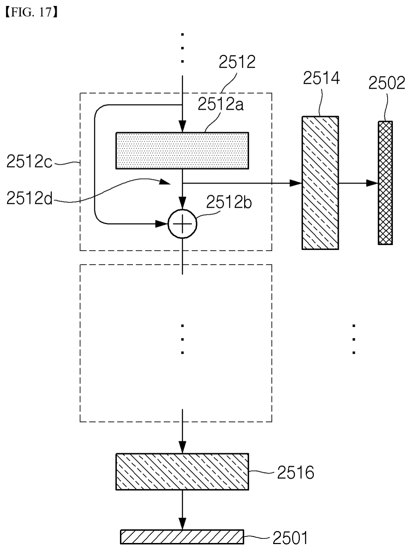

FIGS. 17 and 18 illustrate an example of ABC-Net. More specifically, FIG. 17 illustrates that there are two types of CSI feedback bit streams transmitted by a UE to a BS through uplink feedback. In FIG. 17, a first CSI feedback bit stream 2501 is a signal capable of reconstructing channel information even when it is solely input to a decoder neural network. On the other hand, a second CSI feedback bit stream 2502 must be combined with the first CSI feedback bit stream 2501 so that the decoder neural network can reconstruct CSI. The first CSI feedback bit stream 2501 includes feature values generated by a first output layer 2516 connected to a path including all internal blocks. All the internal blocks include all remaining hidden layers except for other output layers (e.g., a second output layer 2514). The second CSI feedback bit stream 2502 includes feature values generated by the second output layer 2514 connected to a path including some internal blocks. The second output layer 2514 corresponds to a unit block 2512 including some layers 2512a, an operator 2512b, and a skip path 2512c within an encoder neural network. The second output layer 2514 generates a feature value by using a signal of a point 2512d preceding an end of the skip path 2512c among various points within the unit block 2512.

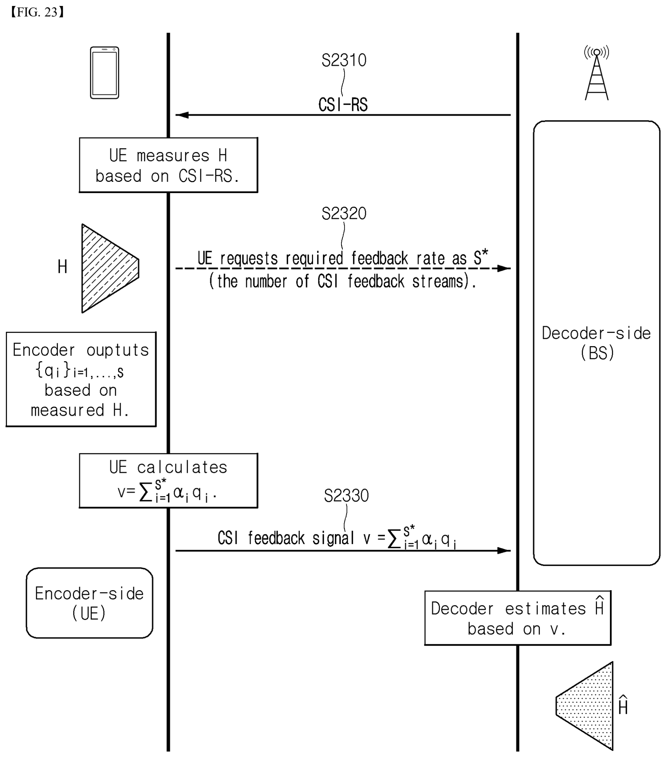

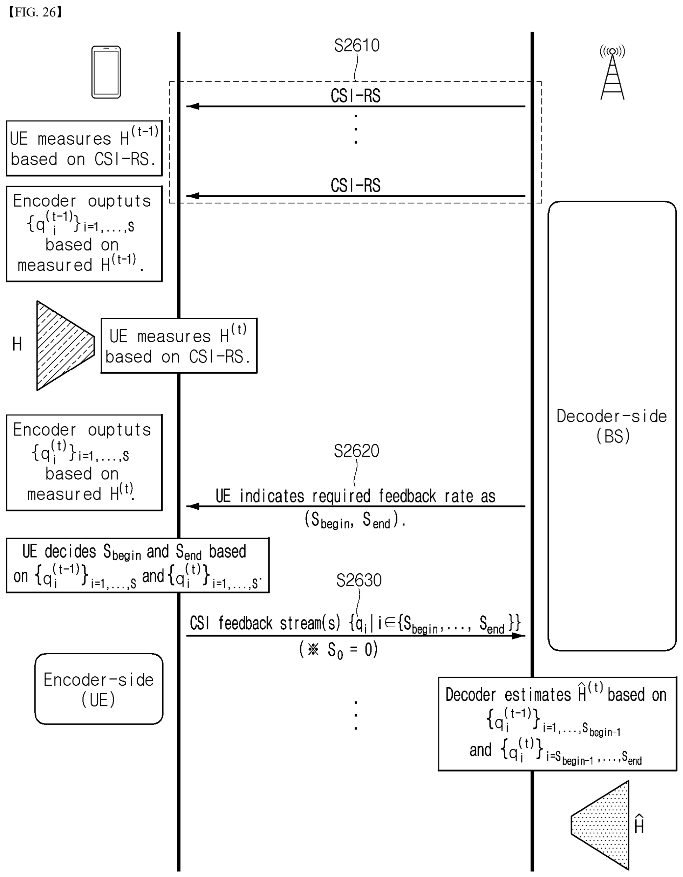

Next, referring to FIG. 18, when there is one feedback bit string, an encoder neural network 2610 outputs a first CSI feedback bit string 2601, and a decoder neural network 2620 reconstructs channel information from the first CSI feedback bit string 2601. When there are two feedback bit strings, the encoder neural network 2610 outputs the first CSI feedback bit string 2601 and a second CSI feedback bit string 2602, and the decoder neural network 2620 reconstructs channel information from a combination of the first CSI feedback bit string 2601 and the second CSI feedback bit string 2602. The first CSI feedback bit string 2501, which can be decoded independently even without being combined with other signals, may be obtained by feature extraction performed after skip connection. On the other hand, the second CSI feedback bit stream 2502 that can be input to the decoder neural network by being added with other signals may be obtained by feature extraction performed before the skip connection. CSI feedback bit streams of different levels may be obtained from blocks of the ResNet architecture of different locations. Referring to FIG. 18, if only one CSI feedback bit stream is transmitted from the UE to the base station, the number of feedback bits may be 512. If all the two CSI feedback bitstreams are transmitted from the UE to the base station, the number of feedback bits may be 1024. The CSI reconstruction performance when a combination of the two CSI feedback bit streams is input to the decoder neural network may be better than that when only one CSI feedback bit stream is input to the decoder neural network. FIG. 26 metaphorically expresses, as an increase in an image resolution of Lena, an improvement in CSI reconstruction performance as the number of CSI feedback bit streams increases, similar to FIG. 23. All the CSI feedback bit streams of different levels may be output by the same encoder neural network model with the same parameter set. The same decoder neural network model with the same parameter set may be used both when only one CSI feedback bit stream is input to the decoder neural network and when a combination of two different CSI feedback bit streams is input to the decoder neural network. That is, the same encoder neural network model and decoder neural network model can be always used regardless of the number of CSI feedback bit streams transmitted from the UE to the base station.

In the present disclosure, the term "added" in the expression of the CSI feedback signal, such as "added and then input to the decoder neural network," comprehensively means a weighted sum, a weighted average, etc., in addition to a summation. Therefore, the most generalized accumulable feedback signal may be viewed as a weighted summation. Accordingly, the present disclosure describes a learning procedure of a CSI network in which an accumulable feedback signal exists based on the weighted sum. The weighted average means that a sum of weights in the weighted sum is 1, and a simple summation means that all the weights in the weighted sum are 1.

In the present disclosure, the term "added" in the expression of the CSI feedback signal, such as "added and then input to the decoder neural network," comprehensively means a weighted sum, a weighted average, etc., in addition to a summation. Therefore, the most generalized accumulable feedback signal may be viewed as a weighted summation. Accordingly, the present disclosure describes a learning procedure of a CSI network in which an accumulable feedback signal exists based on the weighted sum. The weighted average means that a sum of weights in the weighted sum is 1, and a simple summation means that all the weights in the weighted sum are 1.

FIG. 19 illustrates a learning situation where weights can be trained as learnable parameters. More specifically, FIG. 19 illustrates a situation where a bit stream, which is an accumulable feedback signal, is added as a weighted summation, and each weight for a weighted sum can be trained as learnable parameters. In addition, FIG. 19 illustrates that a total number of streams is 4. $\alpha_i$ (S1910-S1940) is a learnable parameter that is multiplied by an i-th feedback bit stream. That is, an input of the decoder neural network may be represented by $\sum_i \alpha_i \mathbf{q}_i$, where $\mathbf{q}_1 i$ denotes the i-th feedback bit stream, and a length of $\mathbf{q}_i$ may be 256 in FIG. 19. In other words, 256 bits may be transmitted when only $\mathbf{q}_1$ is feedback from the UE to the BS, 512 bits may be transmitted when $\mathbf{q}_1$ and $\mathbf{q}_2$ are feedback from the UE to the BS, 768 bits may be transmitted when $\mathbf{q}_1$, $\mathbf{q}_2$ and $\mathbf{q}_3$ are feedback from the UE to the BS, and 1024 bits may be transmitted when all $\mathbf{q}_1$, $\mathbf{q}_2$, $\mathbf{q}_3$ and $\mathbf{q}_4$ are feedback from the UE to the BS. The learnable parameters (weights used for the weighted sum) $\alpha_{i\_(N_{fb})}$ may vary depending on the number of feedback bits $N_{fb}$. $\alpha_{i\_(N_{fb})}$ denotes a weight multiplied by the i-th feedback bit stream when the number of feedback bits is $N_{fb}$. Since the number of feedback bit streams varies depending on the number of feedback bits $N_{fb}$, the number of weights used for the weighted sum may vary. In FIG. 19, since the number of feedback bit streams is 4 when $N_{fb}$ = 1024, four weights $\{\alpha_{1\_(1024)}, \alpha_{2\_(1024)}, \alpha_{3\_(1024)}, \alpha_{4\_(1024)}\}$ are used for the weighted sum, since the number of feedback bit streams is 3 when $N_{fb}$ = 768, three learnable parameters $\{\alpha_{1\_(768)}, \alpha_{2\_(768)}, \alpha_{3\_(768)}\}$ are required for the weighted sum, and since the number of feedback bit streams is 2 when $N_{fb}$ = 512, two weights $\{\alpha_{1\_(512)}, \alpha_{2\_(512)}\}$ are used for the weighted sum. Since a single feedback bit stream is transmitted and received when $N_{fb}$ = 256, it may be seen that only $\alpha_{1\_(256)}$ exists.

FIG. 19 illustrates a learning situation where weights can be trained as learnable parameters. More specifically, FIG. 19 illustrates a situation where a bit stream, which is an accumulable feedback signal, is added as a weighted summation, and each weight for a weighted sum can be trained as learnable parameters. In addition, FIG. 19 illustrates that a total number of streams is 4. $\alpha_i$ (S1910-S1940) is a learnable parameter that is multiplied by an i-th feedback bit stream. That is, an input of the decoder neural network may be represented by $\sum_i \alpha_i \mathbf{q}_i$, where $\mathbf{q}_1 i$ denotes the i-th feedback bit stream, and a length of $\mathbf{q}_i$ may be 256 in FIG. 19. In other words, 256 bits may be transmitted when only $\mathbf{q}_1$ is feedback from the UE to the BS, 512 bits may be transmitted when $\mathbf{q}_1$ and $\mathbf{q}_2$ are feedback from the UE to the BS, 768 bits may be transmitted when $\mathbf{q}_1$, $\mathbf{q}_2$ and $\mathbf{q}_3$ are feedback from the UE to the BS, and 1024 bits may be transmitted when all $\mathbf{q}_1$, $\mathbf{q}_2$, $\mathbf{q}_3$ and $\mathbf{q}_4$ are feedback from the UE to the BS. The learnable parameters (weights used for the weighted sum) $\alpha_{i\_(N_{fb})}$ may vary depending on the number of feedback bits $N_{fb}$. $\alpha_{i\_(N_{fb})}$ denotes a weight multiplied by the i-th feedback bit stream when the number of feedback bits is $N_{fb}$. Since the number of feedback bit streams varies depending on the number of feedback bits $N_{fb}$, the number of weights used for the weighted sum may vary. In FIG. 19, since the number of feedback bit streams is 4 when $N_{fb}$ = 1024, four weights $\{\alpha_{1\_(1024)}, \alpha_{2\_(1024)}, \alpha_{3\_(1024)}, \alpha_{4\_(1024)}\}$ are used for the weighted sum, since the number of feedback bit streams is 3 when $N_{fb}$ = 768, three learnable parameters $\{\alpha_{1(768)}, \alpha_{2\_(768)}, \alpha_{3\_(768)}\}$ are required for the weighted sum, and since the number of feedback bit streams is 2 when $N_{fb}$ = 512, two weights $\{\alpha_{1\_(512)}, \alpha_{2\_(512)}\}$ are used for the weighted sum. Since a single feedback bit stream is transmitted and received when $N_{fb}$ = 256, it may be seen that only $\alpha_{1\_(256)}$ exists.

If constraint, such as $\sum_i \alpha_{i\_(N_{fb})}$ = 1, is added to the learnable parameters $\{\alpha_{i\_(N_{fb})}\}_{i=1,...}$ used for the weighted sum, the weighted sum may be a weighted average. For example, in FIG. 19, $\alpha_{1\_(1024)} + \alpha_{2\_(1024)} + \alpha_{3\_(1024)} + \alpha_{4\_(1024)}$ = 1 may be satisfied when $N_{fb}$ = 1024, $\alpha_{1\_(768)} + \alpha_{2\_(768)} + \alpha_{3\_(768)}$ = 1 may be satisfied when $N_{fb}$ = 768, and $\alpha_{1\_(512)} + \alpha_{2\_(512)}$ = 1 may be satisfied when $N_{fb}$ = 512. The single feedback bit stream is transmitted and received when $N_{fb}$ = 256, and $\alpha_{1\_(256)}$ = 1 may be satisfied. In FIG. 19, $\mathbf{v}_{1024} = \sum_{s=1}^{4} \alpha_{s\_(1024)} \mathbf{q}_i$ is input to the decoder neural network when $N_{fb}$ = 1024, $\mathbf{v}_{768} = \sum_{i=1}^{3} \alpha_{i\_(1024)} \mathbf{q}_i$ is input to the decoder neural network when $N_{fb}$ = 768, $\mathbf{v}_{512} = \sum_{i=1}^{2} \alpha_{i\_(512)} \mathbf{q}_i$ is input to the decoder neural network when $N_{fb}$ = 512, and $\mathbf{v}_{256} = \alpha_{1\_(256)}\mathbf{q}_1$ is input to the decoder neural network when $N_{fb}$ = 256. As the number of feedback bits $N_{fb}$ increases, the CSI reconstruction performance improves, which can be metaphorically expressed as an image resolution being reconstructed to a higher resolution as illustrated in FIG. 14.

In order for the CSI network, in which accumulable feedback exists, to be adaptively operated for a variable feedback rate, the number of CSI feedback streams transmitted and received between the UE and the BS needs to be determined. In other words, the number of feedback streams transmitted and received by the UE and the BS may vary. Therefore, in order to adaptively operate the feedback rate based on a downlink channel environment and an uplink resource situation, the UE must know the number of CSI feedback streams corresponding to the feedback rate required by the BS, and the UE must report CSI feedback signals corresponding to the number of feedback streams to the BS. In this instance, a method in which the BS indicates the feedback rate to the UE may be required. In the method in which the BS indicates the feedback rate to the UE, different signaling procedures and methods may be required depending on the operation method of the UE. Therefore, various signaling procedures are required to mutually agree and determine between the UE and the BS how many streams the UE will use to perform the CSI feedback on the BS.

Below, signaling procedures are described so that the UE and the BS mutually agree and determine how many streams the UE will use to perform the CSI feedback on the BS when operating the CSI network with accumulable feedback signals, as proposed in the present disclosure.

**Encoder NN configuration method**

A method of constructing an encoder NN that outputs a feedback stream as a CSI feedback signal is first described. In general, an output of a fully-connected (FC) layer of the encoder NN may be viewed as a vector consisting of real numbers. When constructing the encoder NN, a sign function [sgn(·)] may be applied as an activation function of the FC layer so that the output of the FC layer can output a bipolar vector $\mathbf{q} \in \{\pm 1\}^B$ equivalent to a bit stream of B bits. The sign function is also called a signum function and is defined as follows.

[Equation 2]

$$\mathrm{sgn}(x) := \begin{cases} -1 & \text{if } x < 0, \\ 0 & \text{if } x = 0, \\ 1 & \text{if } x > 0. \end{cases}$$

The CSI feedback signal may be output from the encoder NN in the form of a bit stream and may be input to a decoder NN. The present disclosure mainly describes that the CSI feedback signal is in the form of a bit stream, but methods proposed in the present disclosure are not limited to being applied only to signals of the form of a bit stream.

The present disclosure assumes that the total number of CSI feedback streams, which are the output of the encoder NN in the CSI network, is S. The present disclosure also assumes that a pilot signal transmitted from a BS to a UE to measure a downlink channel is CSI-RS. This is only for the convenience of explanation, and methods proposed in the present disclosure are not limited to being applied only to the CSI-RS.

**Alpha Layer**

In the present disclosure, the number of CSI feedback streams refers to a value indicating how much detail a UE will feedback channel information to a base station/network, and may be a different concept from a rank indicator (RI) reported in an existing CSI feedback. That is, the RI included and reported in the CSI feedback of the UE is a parameter considered when the base station/network determines a transmission layer (stream) to be used when transmitting downlink data, but the number of CSI feedback streams in the present disclosure refers to the number of CSI feedback streams. More specifically, the CSI feedback signals/streams may be values in which a channel is compressed through an encoder NN. Therefore, the CSI feedback signals/streams of the present disclosure may have a feature of being accumulable, unlike the existing PMI, RI, and CQI. In addition, the existing PMI is an implicit channel feedback, but may be an explicit channel feedback since a channel matrix itself can be reconstructed through the CSI feedback signals/streams of the present disclosure. The channel matrix may be an intermediate value between an encoder and a decoder of an overall autoencoder architecture through the CSI feedback signals/streams of the present disclosure.

Based on the definition/meaning of the CSI feedback stream described above, an alpha layer is defined below. As in FIG. 19, an i-th feedback stream $\mathbf{q}_i$ may be multiplied by a weight $\alpha_i$ and added to create an input $v = \sum_i \alpha_i \mathbf{q}_i$ of a decoder NN, and $\alpha_i$ may be a learnable parameter. Therefore, it may be viewed that a decoder-side (BS) includes one more layer that receives feedback streams $\{\mathbf{q}_i\}_{i=1,2,\ldots}$ as an input and outputs $\mathbf{v} = \sum_i \alpha_i \mathbf{q}_i$ before the decoder NN. That is, in order for at least one/multiple feedback streams transmitted by the UE to be used as the input of the decoder NN, feedback information in the form of multiplying each stream $\mathbf{q}_i$ constituting at least one/multiple feedback streams transmitted by the UE by a weight $\alpha_i$ corresponding to each stream needs to be generated. Therefore, as in FIG. 19, there must be a layer for performing an operation of multiplying each stream $\mathbf{q}_i$ constituting at least one/multiple feedback streams transmitted by the UE by the weight $\alpha_i$ corresponding to each stream in front of an input side of the decoder NN. For convenience of explanation, in the present disclosure, the layer is called an "alpha layer" based on the meaning of performing an operation of multiplying at least one/multiple feedback streams of the UE by $\{\alpha_i\}_{i=1,2,\ldots}$.

In the above description, it was expressed that the alpha layer can exist in the decoder-side (BS), but the alpha layer may also exist in the encoder-side (UE). In this instance, a procedure between the UE and the BS for CSI feedback in a CSI network in which accumulable signals exist may vary depending on whether a location of the alpha layer exists in the UE or the BS, and this will be covered in more detail in a signaling procedure described below.

**Method of signaling the number of CSI feedback streams**

A procedure for CSI feedback in a CSI network in which accumulable signal(s) exist is described below.

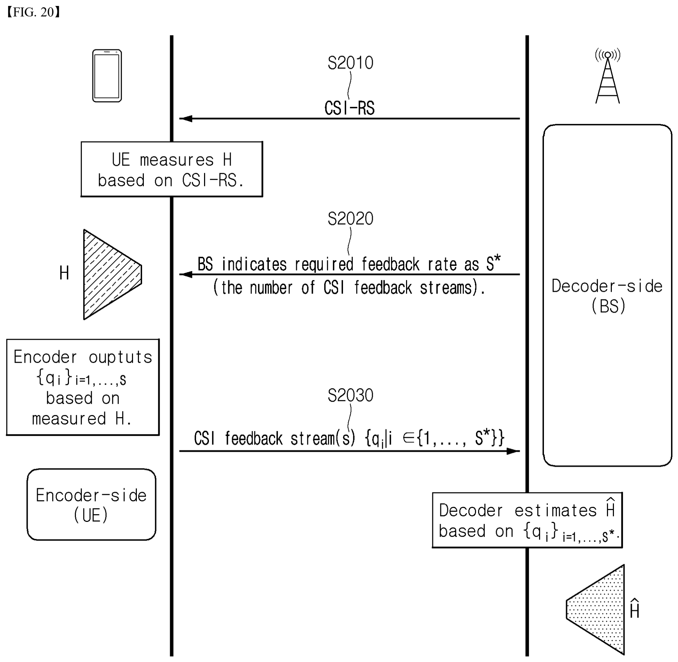

FIG. 20 illustrates an example of a CSI feedback procedure. Procedures illustrated in FIG. 20 are only an example, and it may be interpreted that the CSI feedback procedure proposed in the present disclosure does not have to follow all the procedures illustrated in FIG. 20 and may follow only some of the presented procedures. In addition, it may be interpreted that the order of signaling illustrated in FIG. 20 may vary, and part of the signaling may be omitted. Additionally, it may be interpreted that additional signaling in addition to the procedures illustrated in FIG. 20 may be required or defined.

In general, information on scheduling of uplink resources that can be used for CSI feedback may exist in the BS or may be signaled to the UE by the BS. User scheduling, modulation, precoding, etc. for downlink data transmission are also generally managed by the BS, and most of the authority and information for the operations illustrated in FIG. 20 exist in the BS or are managed by the BS. Therefore, the BS may determine how much detail to receive the CSI feedback from the UE. Hence, in FIG. 20, the UE may receive a CSI-RS to measure a downlink channel in S2010, and the UE may input the measured downlink channel to an encoder neural network of the UE to compress it into a total of $S$ CSI feedback stream(s). Thereafter, the BS may configure how much detail the CSI feedback will be reported to the UE, in S2020. That is, the number $S^*$ of CSI feedback streams corresponding to a feedback rate determined by the BS may be indicated to the UE by the BS. Next, the UE may transmit to the BS only feedback stream(s) corresponding to the number $S^*$ indicated to the UE by the BS among the total of $S$ CSI feedback stream(s) output from the encoder neural network, in S2030. Alternatively, unlike what is illustrated in FIG. 20, the UE may output only feedback stream(s) corresponding to the number $S^*$ indicated to the UE by the BS among the total of S CSI feedback stream(s) through the encoder NN and transmit it to the BS. The BS may estimate the downlink channel through the decoder neural network of the BS based on the $S^*$ CSI feedback stream(s) received from the UE.

A procedure for CSI feedback in various cases that may exist in a CSI network with accumulable signal(s) is described below.

## When alpha layer exists in UE

A CSI feedback procedure when the alpha layer described above exists in the UE is described below. When the alpha layer does not exist in the UE but exists in the BS, the BS may generate a CSI feedback signal by applying a weighted sum through the alpha layer of the BS to CSI feedback stream(s) received from the UE. In the case of the present method. In this method, since the alpha layer exists in the UE, the CSI feedback signal calculated by the UE may be directly input to the decoder neural network of the BS.

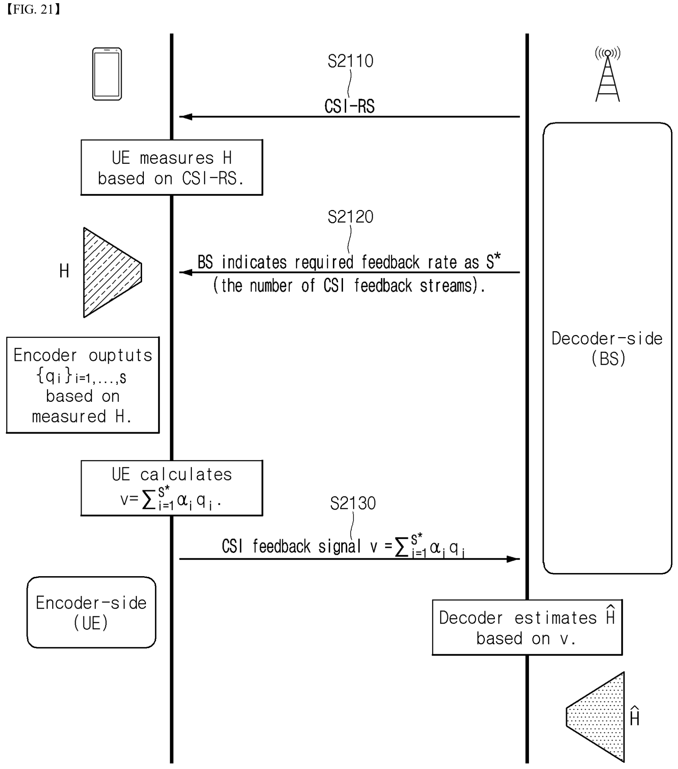

FIG. 21 illustrates an example of a CSI feedback procedure when an alpha layer exists in a UE. Procedures illustrated in FIG. 21 are only an example, and it may be interpreted that the CSI feedback procedure proposed in the present disclosure does not have to follow all the procedures illustrated in FIG. 21 and may follow only some of the presented procedures. In addition, it may be interpreted that the order of signaling illustrated in FIG. 21 may vary, and part of the signaling may be omitted. Additionally, it may be interpreted that additional signaling in addition to the procedures illustrated in FIG. 21 may be required or defined.

In general, information on scheduling of uplink resources that can be used for CSI feedback may exist in the BS or may be signaled to the UE by the BS. User scheduling, modulation, precoding, etc. for downlink data transmission are also generally managed by the BS, and most of the authority and information for the operations illustrated in FIG. 21 exist in the BS or are managed by the BS. Therefore, the BS may determine how much detail to receive the CSI feedback from the UE. Hence, in FIG. 21, the UE receives a CSI-RS to measure a downlink channel in S2110. In this instance, the UE may input the measured downlink channel to an encoder neural network of the UE to compress it into a total of $S$ CSI feedback stream(s). Thereafter, the BS may configure how much detail the CSI feedback will be reported to the UE, in S2120. That is, the number $S^*$ of CSI feedback streams corresponding to a feedback rate determined by the BS may be indicated to the UE by the BS. In this instance, since the alpha layer exists in the UE, the UE may apply a weighted sum to only feedback stream(s) corresponding to the number $S^*$ indicated to the UE by the BS among the total of $S$ CSI feedback stream(s) output from the encoder neural network to calculate $\mathbf{v} = \sum_{i=1}^{S^*} \alpha_i \mathbf{q}_i$. Next, the UE may transmit a weighted-sum signal to the BS, in S2130. Alternatively, unlike what is illustrated in FIG. 21, the UE may output only feedback stream(s) corresponding to the number $S^*$ indicated to the UE by the BS among the total of $S$ CSI feedback stream(s) through the encoder neural network, and the UE may apply a weighted sum to the output $S^*$ feedback stream(s) to calculate $\mathbf{v} = \sum_{i=1}^{S^*} \alpha_i \mathbf{q}_i$ and then transmit it to the BS. The BS may estimate the downlink channel through the decoder neural network of the BS based on the CSI feedback signal $\mathbf{v} = \sum_{i=1}^{S^*} \alpha_i \mathbf{q}_i$ received from the UE.

## When UE decides required feedback rate

A CSI feedback procedure when a UE determines a feedback rate for CSI feedback is proposed below.

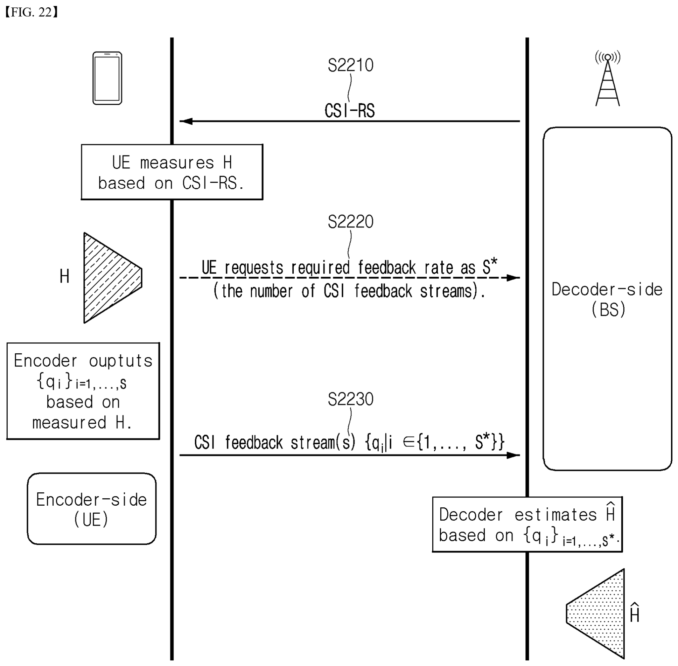

FIG. 22 illustrates an example of a CSI feedback procedure when a UE determines a feedback rate for CSI feedback. Procedures illustrated in FIG. 22 are only an example, and it may be interpreted that the CSI feedback procedure proposed in the present disclosure does not have to follow all the procedures illustrated in FIG. 22 and may follow only some of the presented procedures. In addition, it may be interpreted that the order of signaling illustrated in FIG. 22 may vary, and part of the signaling may be omitted. Additionally, it may be interpreted that additional signaling in addition to the procedures illustrated in FIG. 22 may be required or defined.

In general, information on scheduling of uplink resources that can be used for CSI feedback may exist in the BS or may be signaled to the UE by the BS. User scheduling, modulation, precoding, etc. for downlink data transmission are also generally managed by the BS, and most of the authority and information for the operations illustrated in FIG. 22 exist in the BS or are managed by the BS. Therefore, the BS may determine how much detail to receive the CSI feedback from the UE.

However, it may be necessary for the UE to decide how much detail the CSI feedback is to be reported.

For example, when the mobility of the UE is large, CSI feedback based on a low feedback rate corresponding to a small number of CSI feedback stream(s) may not be sufficient for channel estimation at the BS. Conversely, when the mobility of the UE is too large, CSI feedback based on a high feedback rate corresponding to a large number of CSI feedback stream(s) may be inefficient or unnecessary and thus meaningless. Therefore, it may not be effective or efficient for the UE to perform CSI feedback based on a feedback rate requested from the BS. Accordingly, in such a case, the UE may determine a feedback rate required for the CSI feedback by itself, and the number of CSI feedback streams corresponding to the feedback rate determined by the UE may be transmitted from the UE to the BS.

For another example, if the UE determines that QoS that the UE can measure or calculate by itself is insufficient, the UE may report the CSI feedback to the BS by increasing the number of CSI feedback stream(s) corresponding to the feedback rate. In this instance, the QoS may be a block error rate (BLER). That is, if the BLER measured by the UE is insufficient, the UE may determine that the feedback rate for the CSI report is insufficient, and the UE may increase the number of CSI feedback stream(s) by itself. Hence, in FIG. 22, the UE receives a CSI-RS and measures a downlink channel, in S2210. Next, the UE may request or indicate the BS the number $S^*$ of CSI feedback streams corresponding to a feedback rate determined by the UE, in S2220. In this instance, a request procedure for the number of CSI feedback stream(s) from the UE to the BS may not be explicitly required or may not be explicitly performed. The UE may input the downlink channel measured in step S2210 into an encoder neural network of the UE to compress it into a total of $S$ CSI feedback stream(s). Next, the UE may transmit to the BS only feedback stream(s) as many as $S^*$ feedback stream(s) determined by the UE itself among the total of $S$ CSI feedback stream(s) output from the encoder NN, in S2230. Alternatively, unlike what is illustrated in FIG. 22, the UE may output only the feedback stream(s) as many as $S^*$ feedback stream(s) determined by the UE itself among the total of $S$ CSI feedback stream(s) through the encoder neural network and transmit it to the BS. The BS may estimate the downlink channel through a decoder neural network of the BS based on a CSI feedback signal received from the UE.

<u>When UE decides required feedback rate and alpha layer exists in UE</u>

The following proposes a CSI feedback procedure when an alpha layer exists in a UE while the UE, not a BS, determines a feedback rate for CSI feedback, and a CSI feedback signal that can be directly input to a decoder neural network can be calculated at the UE. If the alpha layer does not exist in the UE but exists in the BS, the BS may generate a CSI feedback signal by applying a weighted sum through the alpha layer of the BS to CSI feedback stream(s) received from the UE. In this method, because the alpha layer exists in the UE, the CSI feedback signal calculated at the UE can be directly input to the decoder neural network of the BS.

FIG. 23 illustrates an example of a CSI feedback procedure when a UE determines a feedback rate for CSI feedback and an alpha layer exists in the UE. Procedures illustrated in FIG. 23 are only an example, and it may be interpreted that the CSI feedback procedure proposed in the present disclosure does not have to follow all the procedures illustrated in FIG. 23 and may follow only some of the presented procedures. In addition, it may be interpreted that the order of signaling illustrated in FIG. 23 may vary, and part of the signaling may be omitted. Additionally, it may be interpreted that additional signaling in addition to the procedures illustrated in FIG. 23 may be required or defined.

In general, information on scheduling of uplink resources that can be used for CSI feedback may exist in the BS or may be signaled to the UE by the BS. User scheduling, modulation, precoding, etc. for downlink data transmission are also generally managed by the BS, and most of the authority and information for the operations illustrated in FIG. 23 exist in the BS or are managed by the BS. Therefore, the BS may determine how much detail to receive the CSI feedback from the UE. However, it may be necessary for the UE to determine how much detail the CSI feedback is to be reported. For example, when the mobility of the UE is large, CSI feedback based on a low feedback rate corresponding to a small number of CSI feedback stream(s) may not be sufficient for channel estimation at the BS. Conversely, when the mobility of the UE is too large, CSI feedback based on a high feedback rate corresponding to a large number of CSI feedback stream(s) may be inefficient or unnecessary and thus meaningless. Therefore, it may not be effective or efficient for the UE to perform CSI feedback based on a feedback rate requested from the BS. Accordingly, in such a case, the UE may determine a feedback rate required for the CSI feedback by itself, and the number of CSI feedback streams corresponding to the feedback rate determined by the UE may be transmitted from the UE to the BS.

For another example, if the UE determines that QoS that the UE can measure or calculate by itself is insufficient, the UE may report the CSI feedback to the BS by increasing the number of CSI feedback stream(s) corresponding to the feedback rate. In this instance, the QoS may be a block error rate (BLER). That is, if the BLER measured by the UE is insufficient, the UE may determine that the feedback rate for the CSI report is insufficient, and the UE may increase the number of CSI feedback stream(s) by itself. Hence, in FIG. 23, the UE receives a CSI-RS and measures a downlink channel, in S2310. Next, the UE may request or indicate the BS the number $S^*$ of CSI feedback streams corresponding to a feedback rate determined by the UE, in S2320. In this instance, a request procedure for the number of CSI feedback stream(s) from the UE to the BS may not be explicitly required or may not be explicitly performed. The UE may input the downlink channel measured in step S2310 into an encoder neural network of the UE to compress it into a total of $S$ CSI feedback stream(s). In this instance, since an alpha layer exists in the UE, the UE may apply a weight sum to only feedback stream(s) as many as $S^*$ feedback stream(s) determined by the UE itself among the total of $S$ CSI feedback stream(s) output from the encoder neural network to calculate $\mathbf{v} = \sum_{i=1}^{S^*} \alpha_i \mathbf{q}_i$. Next, the UE may transmit a weighted sum signal to the BS, in S2330. Alternatively, unlike what is illustrated in FIG. 23, the UE may output only the feedback stream(s) as many as $S^*$ feedback stream(s) determined by the UE itself among the total of $S$ CSI feedback stream(s) through the encoder neural network, and the UE may apply a weight sum to the output $S^*$ feedback stream(s) to calculate $\mathbf{v} = \sum_{i=1}^{S^*} \alpha_i \mathbf{q}_i$, and then may transmit it to the BS. The BS may estimate the downlink channel through a decoder neural network of the BS based on a CSI feedback signal $\mathbf{v} = \sum_{i=1}^{S^*} \alpha_i \mathbf{q}_i$ received from the UE.

When CSI feedback is divided into multiple times

The following describes a CSI feedback procedure when CSI feedback is divided into multiple times and performed. That is, the following describes a CSI feedback procedure of a method in which some stream(s) of a total of $S$ CSI feedback stream(s) are first transmitted from a UE to a BS, and after a very short period of time, some or all of the remaining non-transmitted CSI feedback stream(s) are additionally transmitted from the UE to the BS. This method assumes that a transmission process of the CSI feedback stream(s) performed multiple times is performed within a coherence time of a downlink channel. The BS may estimate the downlink channel by receiving the preceding CSI feedback stream(s) during the CSI feedback procedure performed in multiple times, and may determine whether additional CSI feedback is necessary based on the estimated downlink channel and other information related to scheduling, modulation, precoding, etc. The BS may request the UE to transmit additional CSI feedback stream(s), and may indicate a feedback rate to the UE when requesting the additional CSI feedback.

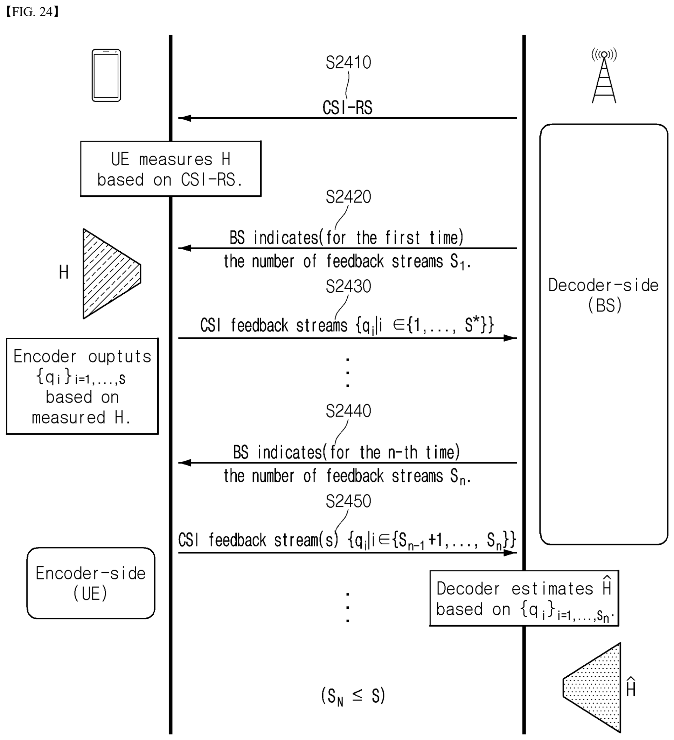

FIG. 24 illustrates an example of a CSI feedback procedure when feedback is dividedly transmitted multiple times. Procedures illustrated in FIG. 24 are only an example, and it may be interpreted that the CSI feedback procedure proposed in the present disclosure does not have to follow all the procedures illustrated in FIG. 24 and may follow only some of the presented procedures. In addition, it may be interpreted that the order of signaling illustrated in FIG. 24 may vary, and part of the signaling may be omitted. Additionally, it may be interpreted that additional signaling in addition to the procedures illustrated in FIG. 24 may be required or defined.

In general, information on scheduling of uplink resources that can be used for CSI feedback may exist in the BS or may be signaled to the UE by the BS. User scheduling, modulation, precoding, etc. for downlink data transmission are also generally managed by the BS, and most of the authority and information for the operations illustrated in FIG. 24 exist in the BS or are managed by the BS. Therefore, the BS may determine how much detail to receive the CSI feedback from the UE.

Referring to FIG. 24, the UE receives a CSI-RS to measure a downlink channel in S2410. In this instance, the UE may input the measured downlink channel to an encoder neural network of the UE to compress it into a total of $S$ CSI feedback stream(s). Thereafter, the BS may indicate, to the UE, feedback stream(s) as many as $S_1$ CSI feedback stream(s), in order to receive CSI feedback based on a feedback rate corresponding to the $S_1$ CSI feedback stream(s), in S2420. Hence, the UE may transmit to the BS only the $S_1$ CSI feedback stream(s) $\{\mathbf{q}_i | i \in \{1, ..., S_1\}\}$ indicated by the BS to the UE among the total of $S$ CSI feedback stream(s) output from the encoder NN, in S2430. The BS may estimate the downlink channel through a decoder neural network of the BS based on the $S_1$ CSI feedback stream(s) $\{\mathbf{q}_i | i \in \{1, ..., S_1\}\}$ received from the UE. In this instance, the BS may determine that a feedback rate of the channel estimated based on the $S_1$ CSI feedback stream(s) $\{\mathbf{q}_i | i \in \{1, ..., S_1\}\}$ is insufficient, and hence, the BS may indicate or request the UE a transmission for up to $S_2$-th CSI feedback stream(s). When the $S_1$ CSI feedback stream(s) transmitted in step S2430 are excluded from the total of $S$ CSI feedback stream(s) output from the encoder NN, $(S - S_1)$ CSI feedback stream(s) exist. Feedback stream(s) $\{\mathbf{q}_i | i \in \{S_1 + 1, ..., S_2\}\}$ as many as $(S_2 - S_1)$ obtained by subtracting $S_1$ from $S_2$, which is the second number indicated by the BS to the UE among the $(S - S_1)$ CSI feedback stream(s), may be transmitted from the UE to the BS as a second CSI feedback. The BS may estimate the downlink channel through the decoder NN based on a total of $S_2$ CSI feedback stream(s) $\{\mathbf{q}_i | i \in \{1, ..., S_2\}\}$ received from the UE two times. In this instance, the BS may determine that a feedback rate of the channel estimated based on the $S_2$ CSI feedback stream(s) $\{\mathbf{q}_i | i \in \{1, ..., S_2\}\}$ is insufficient, and the BS may additionally indicate or request the UE a transmission for up to $S_3$-th CSI feedback stream(s). The BS may repeat the above operation until the estimated feedback rate of the channel is determined to be sufficient. The BS may determine that a feedback rate of the channel estimated based on $S_{n-1}$ CSI feedback stream(s) $\{\mathbf{q}_i | i \in \{1, ..., S_{n-1}\}\}$ is insufficient, and the BS may indicate or request the UE a transmission for up to $S_n$-th CSI feedback stream(s), in S2440. If the number of CSI feedback streams that is n-th indicated by the BS to the UE is $S_n$, the UE may transmit, to the BS, $(S_{n-1} + 1)$-th CSI feedback stream to $S_n$-th CSI feedback stream, in S2450. That is, feedback stream(s) $\{\mathbf{q}_i | i \in \{S_{n-1} + 1, ..., S_n\}\}$ may be additionally transmitted from the UE to the BS. The BS may estimate the downlink channel through the decoder NN based on a total of $S_n$ CSI feedback stream(s) $\{\mathbf{q}_i | i \in \{1, ..., S_n\}\}$ received from the UE n times.

In this instance, if an indication about the number of CSI feedback stream(s) and transmission of the CSI feedback streams are finally performed N times in total, $S_N \leq S$ may be satisfied.

**When CSI feedback is divided into multiple times and alpha layer exists in UE**

The following describes a CSI feedback procedure when an alpha layer exists in a UE while CSI feedback is divided into multiple times and performed. More specifically, the following describes a CSI feedback procedure of a method in which a weighted sum of some stream(s) of a total of $S$ CSI feedback stream(s) is first transmitted from the UE to a BS, and after a very short period of time, a weighted sum of some or all of the remaining non-transmitted CSI feedback stream(s) is additionally transmitted from the UE to the BS. This method assumes that a transmission process of the CSI feedback stream(s) performed multiple times is performed within a coherence time of a downlink channel.

As described above, learnable parameters (weights used in a weighted sum) $\alpha_{i\ (Nfb)}$ may generally vary depending on a feedback rate $N_{fb}$, but this method assumes that weights $\alpha_i$ used in the weighted sum are maintained regardless of the feedback rate. That is, the CSI feedback procedure proposed in this method may be preferably applied when the weights $\alpha_i$ used in the weighted sum are maintained regardless of the feedback rate. The BS may estimate the downlink channel by receiving the preceding CSI feedback stream(s) during the CSI feedback procedure performed in multiple times, and may determine whether additional CSI feedback is necessary based on the estimated downlink channel and other information related to scheduling, modulation, precoding, etc. The BS may request the UE to transmit additional CSI feedback stream(s), and may indicate a feedback rate to the UE when requesting the additional CSI feedback.

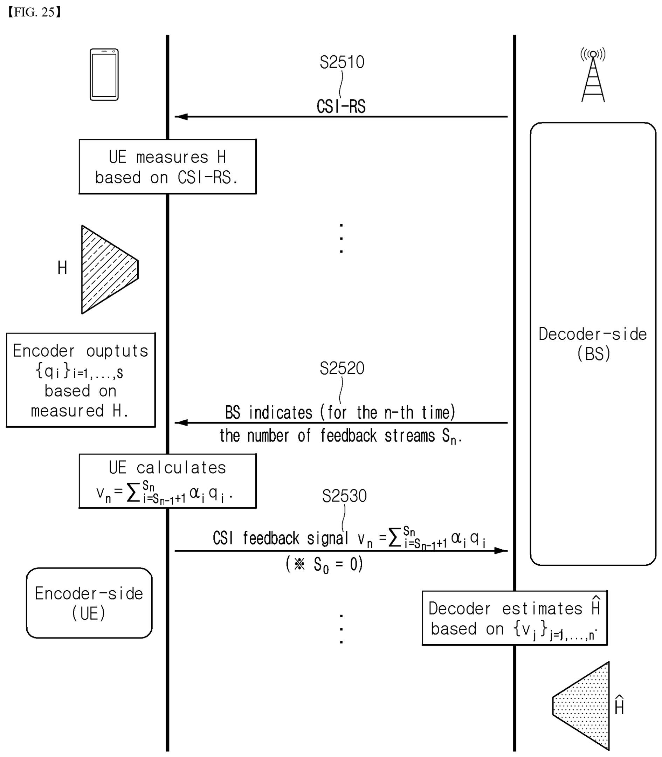

FIG. 25 illustrates an example of a CSI feedback procedure when an alpha layer exists in a UE while feedback is dividedly transmitted multiple times. Procedures illustrated in FIG. 25 are only an example, and it may be interpreted that the CSI feedback procedure proposed in the present disclosure does not have to follow all the procedures illustrated in FIG. 25 and may follow only some of the presented procedures. In addition, it may be interpreted that the order of signaling illustrated in FIG. 25 may vary, and part of the signaling may be omitted. Additionally, it may be interpreted that additional signaling in addition to the procedures illustrated in FIG. 25 may be required or defined.

In general, information on scheduling of uplink resources that can be used for CSI feedback may exist in the BS or may be signaled to the UE by the BS. User scheduling, modulation, precoding, etc. for downlink data transmission are also generally managed by the BS, and most of the authority and information for the operations illustrated in FIG. 25 exist in the BS or are managed by the BS. Therefore, the BS may determine how much detail to receive the CSI feedback from the UE.

Referring to FIG. 25, the UE receives a CSI-RS to measure a downlink channel in S2510. In this instance, the UE may input the measured downlink channel to an encoder neural network of the UE to compress it into a total of $S$ CSI feedback stream(s). Thereafter, the BS may indicate, to the UE, feedback stream(s) as many as $S_1$ CSI feedback stream(s), in order to receive CSI feedback based on a feedback rate corresponding to the $S_1$ CSI feedback stream(s). In this instance, since an alpha layer exists in the UE, the UE may perform a weighted sum on only the $S_1$ CSI feedback stream(s) $\{\mathbf{q}_i | i \in \{1, ..., S_1\}\}$ indicated by the BS to the UE among the total of $S$ CSI feedback stream(s) output from the encoder NN to calculate $\mathbf{v}_1 = \sum_{i=1}^{S_1} \alpha_i \mathbf{q}_i$. The calculated weighted sum signal $\mathbf{v}_1 = \sum_{i=1}^{S_1} \alpha_i \mathbf{q}_i$ may be preferentially transmitted to the BS. The BS may estimate the downlink channel through a decoder neural network of the BS based on the weighted sum signal $\mathbf{v}_1 = \sum_{i=1}^{S_1} \alpha_i \mathbf{q}_i$ received from the UE. In this instance, the BS may determine that a feedback rate of the channel estimated based on the first weighted sum signal $\mathbf{v}_1 = \sum_{i=1}^{S_1} \alpha_i \mathbf{q}_i$ is insufficient, and hence, the BS may indicate or request the UE a transmission for up to $S_2$-th CSI feedback stream(s). When the $S_1$ CSI feedback stream(s) which are added through the weighted sum and transmitted are excluded from the total of $S$ CSI feedback stream(s) output from the encoder NN, $(S - S_1)$ CSI feedback stream(s) exist. A weighted sum signal $\mathbf{v}_2 = \sum_{i=S_1+1}^{S_2} \alpha_i \mathbf{q}_i$ for feedback stream(s) $\{\mathbf{q}_i | i \in \{S_1 + 1, ..., S_2\}\}$ as many as $(S_2 - S_1)$ obtained by subtracting $S_1$ from $S_2$, which is the second number indicated by the BS to the UE among the $(S - S_1)$ CSI feedback stream(s), may be transmitted from the UE to the BS as a second CSI feedback. The BS may estimate the downlink channel through the decoder NN based on a total of two CSI feedback signals $\{\mathbf{v}_1, \mathbf{v}_2\}$ received from the UE. In this instance, the BS may determine that a feedback rate of the channel estimated based on the two weighted sum signals $\{\mathbf{v}_1, \mathbf{v}_2\}$ is insufficient, and the BS may additionally indicate or request the UE a transmission of the weighted sum signals for up to $S_3$-th CSI feedback stream(s). The BS may repeat the above operation until the estimated feedback rate of the channel is determined to be sufficient. The BS may determine that a feedback rate of the channel estimated based on weighted sum signals $\{v_j\}_{j=1,...,n-1}$ for $S_{n-1}$ CSI feedback stream(s) $\{\mathbf{q}_i | i \in \{1, ..., S_{n-1}\}\}$ is insufficient, and the BS may additionally indicate or request the UE a transmission of weighted sum signals for up to $S_n$-th CSI feedback stream(s), in S2520. If the number of CSI feedback streams that is n-th indicated by the BS to the UE is $S_n$, the UE may transmit, to the BS, weighted sum signals for $(S_{n-1} + 1)$-th CSI feedback stream to $S_n$-th CSI feedback stream, in S2530. That is, $\mathbf{v}_n = \sum_{i=S_{n-1}+1}^{S_n} \alpha_i \mathbf{q}_i$ may be transmitted from the UE to the BS. The BS may estimate the downlink channel through the decoder NN based on a total of n CSI feedback signals $\{v_j\}_{j=1,\ldots,n}$ received from the UE n times in total. In this case, $S_0 = 0$ may be set to avoid loss of generality.

<u>When previous CSI feedback is partially reused</u>

The following describes a CSI feedback procedure when a part of a previous CSI feedback is reused for a current channel estimation. That is, the following present a CSI feedback method in which when a UE has received a new CSI-RS after the UE has previously received a CSI-RS and already performed CSI feedback, uplink resources can be saved by utilizing the previously performed CSI feedback. This method assumes that at least part of CSI feedback stream(s) transmitted in the previous CSI feedback are sufficiently unchanged to be reused in current CSI feedback.

The BS may reuse some of CSI feedback stream(s) received in the previous CSI feedback, but may receive new CSI feedback only for CSI feedback stream(s) that are not reused. In this instance, since the UE knows which CSI feedback stream(s) has transmitted in the previous CSI feedback, the UE may indicate, to the BS, which CSI feedback stream(s) to reuse from the previous CSI feedback for current channel estimation and which CSI feedback stream(s) to newly receive.

FIG. 26 illustrates an example of a CSI feedback procedure when a part of a previous CSI feedback is reused for current channel estimation. Procedures illustrated in FIG. 26 are only an example, and it may be interpreted that the CSI feedback procedure proposed in the present disclosure does not have to follow all the procedures illustrated in FIG. 26 and may follow only some of the presented procedures. In addition, it may be interpreted that the order of signaling illustrated in FIG. 26 may vary, and part of the signaling may be omitted. Additionally, it may be interpreted that additional signaling in addition to the procedures illustrated in FIG. 26 may be required or defined.

In general, information on scheduling of uplink resources that can be used for CSI feedback may exist in the BS or may be signaled to the UE by the BS. User scheduling, modulation, precoding, etc. for downlink data transmission are also generally managed by the BS, and most of the authority and information for the operations illustrated in FIG. 25 exist in the BS or are managed by the BS. Therefore, the BS may determine how much detail to receive the CSI feedback from the UE. However, it may be necessary for the UE to determine how much detail the CSI feedback is to be reported. For example, when the mobility of the UE is large, CSI feedback based on a low feedback rate corresponding to a small number of CSI feedback stream(s) may not be sufficient for channel estimation at the BS. Conversely, when the mobility of the UE is too large, CSI feedback based on a high feedback rate corresponding to a large number of CSI feedback stream(s) may be inefficient or unnecessary and thus meaningless. Therefore, it may not be effective or efficient for the UE to perform CSI feedback based on a feedback rate requested from the BS. Accordingly, in such a case, the UE may determine a feedback rate required for the CSI feedback by itself, and the number of CSI feedback streams corresponding to the feedback rate determined by the UE may be transmitted from the UE to the BS.

For another example, if the UE determines that QoS that the UE can measure or calculate by itself is insufficient, the UE may report the CSI feedback to the BS by increasing the number of CSI feedback stream(s) corresponding to the feedback rate. In this instance, the QoS may be a block error rate (BLER). That is, if the BLER measured by the UE is insufficient, the UE may determine that the feedback rate for the CSI report is insufficient, and the UE may increase the number of CSI feedback stream(s) by itself.

Returning again to FIG. 26, $\mathbf{H}^{(t)}$ denotes a current downlink channel, and $\mathbf{H}^{(t-1)}$ denotes a downlink channel in previous CSI feedback. $\mathbf{q}_i^{(t)}$ denotes an i-th CSI feedback stream for the current downlink channel. That is, $\mathbf{q}_i^{(t)}$ is an i-th output of an encoder NN for the current downlink channel. $\mathbf{q}_i^{(t-1)}$ is a CSI feedback stream which is the i-th output of the encoder NN for the current downlink channel in the previous CSI feedback. In FIG. 26, remaining signaling other than transmission and reception signaling of CSI-RS between the UE and the BS in a previous CSI feedback procedure is omitted for convenience of explanation, in S2610. The UE may receive a CSI-RS to measure a downlink channel, and the UE may input the measured downlink channel into an encoder neural network of the UE to compress it into a total of $S$ CSI feedback stream(s). Thereafter, the UE may indicate/transmit, to the BS, information on a feedback rate determined by the UE and ($S_{begin}$, $S_{end}$) which is CSI feedback configuration related to the reuse of the feedback stream(s) in the previous CSI feedback procedure, in S2620. In this instance, the UE may compare CSI feedback stream(s) $\left\{\mathbf{q}_i^{(t-1)}\right\}_{i=1,\ldots,S}$ for the previous CSI feedback with CSI feedback stream(s) $\left\{\mathbf{q}_i^{(t)}\right\}_{i=1,\ldots,S}$ for the current CSI feedback to determine a scope of the ($S_{begin}$, $S_{end}$).

Next, the UE may transmit, to the BS, only feedback stream(s) corresponding to the scope of ($S_{begin}$, $S_{end}$) determined by the UE itself among the total of $S$ CSI feedback stream(s) output from the encoder NN, in S2630. The BS may reuse only CSI feedback streams up to ($S_{begin}$ - 1)-th CSI feedback stream among the CSI feedback streams received through the previous CSI feedback based on an indication from the UE, and estimate the current downlink channel based on the feedback stream(s) received through the current CSI feedback from $S_{begin}$-th CSI feedback stream to $S_{end}$-th CSI feedback stream. That is, the BS may estimate the current downlink channel through the decoder NN based on CSI feedback stream(s) $\left\{\mathbf{q}_i^{(t)}\right\}_{i=S_{\text{begin}},\ldots,S_{\text{end}}}$ received in the current CSI feedback from the UE and CSI feedback stream(s) $\left\{\mathbf{q}_i^{(t-1)}\right\}_{i=1,\ldots,S_{\text{begin}}-1}$ received in the previous CSI feedback from the UE.

**Effect**

The present disclosure has an effect that a feedback rate can be adaptively operated based on a downlink channel environment and an uplink channel situation, by applying the methods described in the present disclosure.

The present disclosure also has an effect that a CSI network in which accumulable CSI feedback signals exist can be operated.

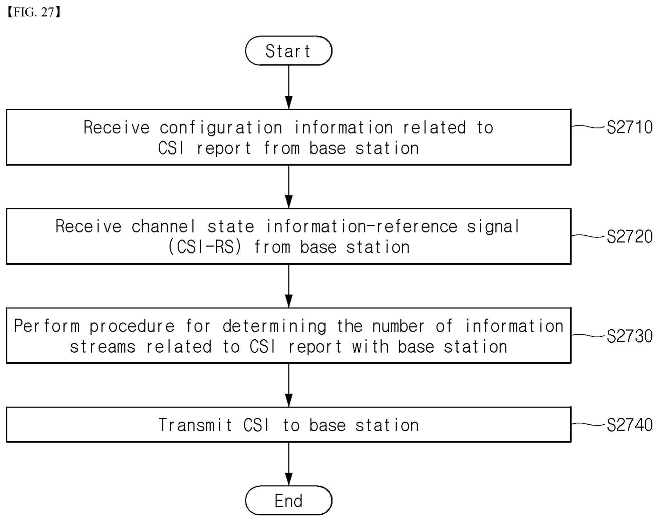

FIG. 27 is a flowchart illustrating an example where a channel state reporting method described in the present disclosure is performed by a UE.

First, the UE receives configuration information related to a CSI report from a base station, in S2710.

Next, the UE receives a channel state information-reference signal (CSI-RS) from the base station, in S2720.

Next, the UE performs, with the base station, a procedure for determining a number of at least one information stream related to the CSI report, in S2730.

Finally, the UE transmits the CSI to the base station, in S2740.

In this instance, the CSI is transmitted based on an information stream as many as the determined number. Based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of at least one information stream related to the CSI report includes determining the number of at least one information stream related to the CSI report; and transmitting information on the determined number to the base station. The information on the determined number includes information on a specific information stream scope within the at least one second information stream.

The UE includes a transmitter transmitting a radio signal, a receiver receiving the radio signal, at least one processor, and at least one computer memory operably connectable to the at least one processor and storing instructions performing operations based on being executed by the at least one processor. The operations include the steps described with reference to FIG. 27.

The operations described with reference to FIG. 27 may be stored in a non-transitory computer readable medium (CRM) storing one or more instructions. The non-transitory computer readable medium stores one or more instructions executable by one or more processors, and the one or more instructions allow the UE to perform the operations described with reference to FIG. 27.

In a device including one or more memories and one or more processors operably connected to the one or more memories, the one or more processors control the device to perform the operations described with reference to FIG. 27.

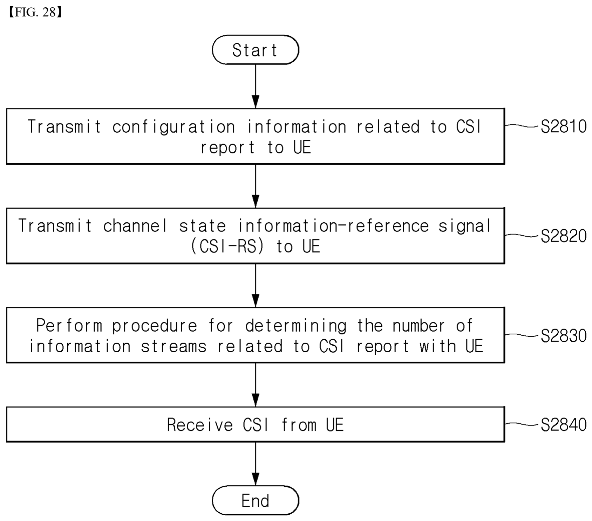

FIG. 28 is a flowchart illustrating an example where a channel state reporting method described in the present disclosure is performed by a base station.

First, the base station transmits configuration information related to a CSI report to a UE, in S2810.

Next, the base station transmits a channel state information-reference signal (CSI-RS) to the UE, in S2820.

Next, the base station performs, with the UE, a procedure for determining a number of at least one information stream related to the CSI report, in S2830.

Finally, the base station receives the CSI from the UE, in S2840.

In this instance, the CSI is transmitted based on an information stream as many as the determined number. Based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of at least one information stream related to the CSI report includes receiving, from the UE, information on the number of at least one information stream related to the CSI report determined by the UE. The information on the determined number includes information on a specific information stream scope within the at least one second information stream.

The base station includes a transmitter transmitting a radio signal, a receiver receiving the radio signal, at least one processor, and at least one computer memory operably connectable to the at least one processor and storing instructions performing operations based on being executed by the at least one processor. The operations include the steps described with reference to FIG. 28.

The operations described with reference to FIG. 28 may be stored in a non-transitory computer readable medium (CRM) storing one or more instructions. The non-transitory computer readable medium stores one or more instructions executable by one or more processors, and the one or more instructions allow the base station to perform the operations described with reference to FIG. 28.

In a device including one or more memories and one or more processors operably connected to the one or more memories, the one or more processors control the device to perform the operations described with reference to FIG. 28.

The embodiments described above are implemented by combinations of components and features of the present disclosure in predetermined forms. Each component or feature should be considered selectively unless specified separately. Each component or feature can be carried out without being combined with another component or feature. Moreover, some components and/or features are combined with each other and can implement embodiments of the present disclosure. The order of operations described in embodiments of the present disclosure can be changed. Some components or features of one embodiment may be included in another embodiment, or may be replaced by corresponding components or features of another embodiment. It is apparent that some claims referring to specific claims may be combined with another claims referring to the claims other than the specific claims to constitute the embodiment or add new claims by means of amendment after the application is filed.

Embodiments of the present disclosure can be implemented by various means, for example, hardware, firmware, software, or combinations thereof. When embodiments are implemented by hardware, one embodiment of the present disclosure can be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the present disclosure can be implemented by modules, procedures, functions, etc. performing functions or operations described above. Software code can be stored in a memory and can be driven by a processor. The memory is provided inside or outside the processor and can exchange data with the processor by various well-known means.

It is apparent to those skilled in the art that the present disclosure can be embodied in other specific forms without departing from essential features of the present disclosure. Accordingly, the above detailed description should not be construed as limiting in all aspects and should be considered as illustrative. The scope of the present disclosure should be determined by rational construing of the appended claims, and all modifications within an equivalent scope of the present disclosure are included in the scope of the present disclosure.

[Industrial Availability]

Although the present disclosure has been described focusing on examples applying to the 3GPP LTE/LTE-A system and the 5G system, the present disclosure can be applied to various wireless communication systems in addition to the 3GPP LTE/LTE-A system and the 5G system.

**Claims**

1. A method of reporting, by a user equipment (UE), channel state information (CSI) in a wireless communication system, the method comprising:

> receiving configuration information related to a CSI report from a base station;
> receiving a channel state information-reference signal (CSI-RS) from the base station;
> performing, with the base station, a procedure for determining a number of at least one information stream related to the CSI report,
> wherein each of the at least one information stream includes a CSI parameter; and
> transmitting the CSI to the base station,
> wherein the CSI is transmitted based on an information stream as many as the determined number,
> wherein based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises:
>
>> determining the number of the at least one information stream related to the CSI report; and
>> transmitting information on the determined number to the base station,

wherein the information on the determined number includes information on a specific information stream scope within the at least one second information stream.

2. The method of claim 1, wherein the information on the specific information stream scope includes, within multiple information streams, (i) information on an information stream related to a start location of the specific information stream scope and (ii) information on an information stream related to an end location of the specific information stream scope.

3. The method of claim 2, wherein an information stream included in the specific information stream scope among the at least one second information stream within the at least one second information stream is included in the information stream as many as the determined number.

4. The method of claim 3, wherein, among the at least one first information stream within the at least one first information stream, information streams from (i) a first information stream of the at least one first information stream to (ii) a previous information stream of an information stream corresponding to the information on the information stream related to the start location of the specific information stream scope are included in the information stream as many as the determined number.

5. The method of claim 4, wherein a number of the at least one first information stream is the same as a number of the at least one second information stream.

6. The method of claim 4, wherein the weighted sum for the information stream as many as the determined number is performed by the base station.

7. The method of claim 1, wherein transmitting the CSI comprises:

transmitting, to the base station, first CSI generated based on some information streams of information streams generated as many as the determined number of the at least one information stream; and
transmitting, to the base station, second CSI generated based on all or some of remaining information streams excluding the some information streams from the information streams generated as many as the determined number of the at least one information stream.

8. The method of claim 7, wherein the first CSI is generated by performing a weighted sum on the some information streams, and
wherein the second CSI is generated by performing a weighted sum on all or some of the remaining information streams excluding the some information streams from the information streams generated as many as the determined number of the at least one information stream.

9. The method of claim 1, wherein performing the procedure for determining the number of the at least one information stream related to the CSI report comprises receiving the information on the determined number from the base station.

10. The method of claim 1, wherein the CSI parameter is a value by compressing a channel measured by the UE through an encoder neural network of the UE.

11. A user equipment (UE) reporting channel state information (CSI) in a wireless communication system, the UE comprising:

a transmitter transmitting a radio signal;
a receiver receiving the radio signal;
at least one processor; and
at least one computer memory operably connectable to the at least one processor and storing instructions performing operations based on being executed by the at least one processor,
wherein the operations comprise:

receiving configuration information related to a CSI report from a base station;
receiving a channel state information-reference signal (CSI-RS) from the base station;
performing, with the base station, a procedure for determining a number of at least one information stream related to the CSI report, each of the at least one information stream including a CSI parameter; and

transmitting the CSI to the base station,
wherein the CSI is transmitted based on an information stream as many as the determined number,
wherein based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises:

determining the number of the at least one information stream related to the CSI report; and
transmitting information on the determined number to the base station,
wherein the information on the determined number includes information on a specific information stream scope within the at least one second information stream.

12. A method of receiving, by a base station, channel state information (CSI) in a wireless communication system, the method comprising:

transmitting configuration information related to a CSI report to a user equipment (UE);
transmitting a channel state information-reference signal (CSI-RS) to the UE;
performing, with the UE, a procedure for determining a number of at least one information stream related to the CSI report; and
receiving the CSI from the UE,
wherein the CSI is transmitted based on an information stream as many as the determined number,
wherein based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises:

receiving, from the UE, information on the number of the at least one information stream related to the CSI report determined by the UE,
wherein information on the determined number includes information on a specific information stream scope within the at least one second information stream.

13. A base station receiving channel state information (CSI) in a wireless communication system, the base station comprising:

a transmitter transmitting a radio signal;
a receiver receiving the radio signal;
at least one processor; and
at least one computer memory operably connectable to the at least one processor and storing instructions performing operations based on being executed by the at least one processor,
wherein the operations comprise:

transmitting configuration information related to a CSI report to a user equipment (UE);
transmitting a channel state information-reference signal (CSI-RS) to the UE;
performing, with the UE, a procedure for determining a number of at least one information stream related to the CSI report; and
receiving the CSI from the UE,
wherein the CSI is transmitted based on an information stream as many as the determined number,
wherein based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises:

receiving, from the UE, information on the number of the at least one information stream related to the CSI report determined by the UE,
wherein information on the determined number includes information on a specific information stream scope within the at least one second information stream.

14. A non-transitory computer readable medium (CRM) storing one or more instructions,
wherein the one or more instructions executable by one or more processors allow a user equipment (UE) to:

receive configuration information related to a CSI report from a base station;
receive a channel state information-reference signal (CSI-RS) from the base station;
perform, with the base station, a procedure for determining a number of at least one information stream related to the CSI report, each of the at least one information stream including a CSI parameter; and
transmit the CSI to the base station,
wherein the CSI is transmitted based on an information stream as many as the determined number,
wherein based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises:

determining the number of the at least one information stream related to the CSI report; and
transmitting information on the determined number to the base station,
wherein the information on the determined number includes information on a specific information stream scope within the at least one second information stream.

15. A device including one or more memories and one or more processors operably connected to the one or more memories,
wherein the one or more processors allow the device to:

receive configuration information related to a CSI report from a base station;
receive a channel state information-reference signal (CSI-RS) from the base station;
perform, with the base station, a procedure for determining a number of at least one information stream related to the CSI report, each of the at least one information stream including a CSI parameter; and
transmit the CSI to the base station,
wherein the CSI is transmitted based on an information stream as many as the determined number,
wherein based on (i) the CSI being transmitted without performing a weighted sum of the UE for the information stream as many as the determined number and (ii) the information stream as many as the determined number being configured based on (a) at least one first information stream related to CSI generated based on a CSI-RS transmitted prior to the CSI-RS and (b) at least one second information stream related to CSI generated based on the CSI-RS: performing the procedure for determining the number of the at least one information stream related to the CSI report comprises:

determining the number of the at least one information stream related to the CSI report; and
transmitting information on the determined number to the base station,
wherein the information on the determined number includes information on a specific information stream scope within the at least one second information stream.

【FIG. 1】

【FIG. 2】

【FIG. 3】

300

codewords          layers

310          320          330          340          350          360

【FIG. 4】

Device(400)

| Communication unit(410)<br>(e.g., 5G communication unit) | Control unit(420)<br>(e.g., processor(s)) |
| --- | --- |
| Communication circuit(412)<br>(e.g., processor(s),memory(s)) | Memory unit(430)<br>(e.g., RAM, storage) |
| Transceiver(s)(414)<br>(e.g., RF unit(s),antenna(s)) | Additional components(440)<br>(e.g., power unit/battery,<br>I/O unit,driving unit,<br>computing unit) |

【FIG. 5】

【FIG. 6】

· DL/UL ACK/NACK
· UE CQI/PMI RI REPORT
  USING PUSCH AND PUCCH

【FIG. 7】

```
· · · · · ·        One Frame (10ms)                  · · · · · ·

· · · · · ·    Half Frame (5ms)      Half Frame (5ms)    · · · · · ·

· · · · · ·  subFrame 0  ······  subFrame 4   subFrame 5  ······  subFrame 9   · · · · · ·
             (1ms)               (1ms)        (1ms)               (1ms)
```

subframe(1ms)

| 15KHz | Slot 0 (14symbols) |
|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

【FIG. 8】

Resource grid

A carrier

A BWP

1 RB

1 RE

1 subcarrier

1 symbol

l=0 · · · · ·

k=0

[ FIG. 9]

**[ FIG. 10]**

Encoder (1810)
N×1 ... 1
32×32 ... 2

removed
input
delay
$N_c$
$\tilde{N}_c$
angle

Rx
CSI encoder
M×1 ← codeword

Copy
Reshape
Conv 3×3; batch norm
Conv 3×3; batch norm; Sigmoid
Conv 3×3; batch norm; LeakyReLU alpha = 0.3

Dense; Linear
LeakyReLU alpha = 0.3

Tx
CSI decoder
M×1 ← codeword

Decoder (1820)
N×1 ... 1
RefineNet
32×32 ... 2
32×32 ... 2
32×32 ... 8
32×32 ... 16

RefineNet
32×32 ... 2

output
delay
angle

【FIG. 11】

EP 4 651 396 A1

【FIG. 12】

【FIG. 13】

• Different encoder/decoder NN architectures
and/or models (parameter sets) for different feedback rates

Encoder NN

Decoder NN

√ the number of feedback bits:1024

√ the number of feedback bits:512

√ the number of feedback bits:256

【FIG. 14】

2310  2301  2320  2391

√ the number of feedback bits:256

2302 2301  2392

√ the number of feedback bits:512

2303 2302 2301  2393

√ the number of feedback bits:768

2304 2303 2302 2301  2394

√ the number of feedback bits:1024

**【FIG. 15】**

- Different encoder NN architectures
  and/or models (parameter sets) for different feedback rates

√Bit stream for fixed feedback rate

【FIG. 16】

【FIG. 17】

【FIG. 18】

• When the number of transmitted feedback bit streams = 1

2691

2610    2601    2620

√ the number of feedback bits:512

• When the number of transmitted feedback bit streams = 2

2692

2610    2602 2601    2620

√ the number of feedback bits:1024

【FIG. 19】

S1910    S1910    S1910    S1910

$\alpha_4 \times$  $\oplus \alpha_3 \times$  $\oplus \alpha_2 \times$  $\oplus \alpha_1 \times$

【FIG. 20】

S2010

CSI-RS

UE measures H
based on CSI-RS.

S2020

BS indicates required feedback rate as S*
(the number of CSI feedback streams).

H

Encoder ouptuts
$\{q_i\}_{i=1,\ldots,s}$
based on
measured H.

S2030

CSI feedback stream(s) $\{q_i|i \in\{1,\ldots, S^*\}\}$

Decoder-side
(BS)

Encoder-side
(UE)

Decoder estimates $\hat{H}$
based on $\{q_i\}_{i=1,\ldots,S^*}$.

$\hat{H}$

【FIG. 21】

S2110

CSI-RS

UE measures H
based on CSI-RS.

S2120

BS indicates required feedback rate as $S^*$
(the number of CSI feedback streams).

$H$

Encoder ouptuts
$\{q_i\}_{i=1,\dots,s}$
based on
measured H.

UE calculates
$v = \sum_{i=1}^{S^*} \alpha_i q_i$.

S2130

CSI feedback signal $v = \sum_{i=1}^{S^*} \alpha_i q_i$

Encoder-side
(UE)

Decoder-side
(BS)

Decoder estimates $\hat{H}$
based on v.

$\hat{H}$

【FIG. 22】

【FIG. 23】

S2310

CSI-RS

UE measures H based on CSI-RS.

H

S2320

UE requests required feedback rate as $S^*$ (the number of CSI feedback streams).

Encoder ouptuts $\{q_i\}_{i=1,\ldots,s}$ based on measured H.

Decoder-side (BS)

UE calculates $v = \sum_{i=1}^{S^*} \alpha_i q_i$.

S2330

CSI feedback signal $v = \sum_{i=1}^{S^*} \alpha_i q_i$

Encoder-side (UE)

Decoder estimates $\hat{H}$ based on v.

$\hat{H}$

【FIG. 24】

S2410

CSI-RS

UE measures H based on CSI-RS.

H

Encoder ouptuts $\{q_i\}_{i=1,\ldots,s}$ based on measured H.

S2420

BS indicates(for the first time) the number of feedback streams $S_1$.

S2430

CSI feedback streams $\{q_i | i \in \{1,\ldots,S^*\}\}$

S2440

BS indicates(for the n-th time) the number of feedback streams $S_n$.

S2450

CSI feedback stream(s) $\{q_i | i \in \{S_{n-1}+1,\ldots, S_n\}\}$

Decoder-side (BS)

Decoder estimates $\hat{H}$ based on $\{q_i\}_{i=1,\ldots,s_n}$.

Encoder-side (UE)

$\hat{H}$

$(S_N \leq S)$

【FIG. 25】

UE measures H
based on CSI-RS.

H

Encoder ouptuts
$\{q_i\}_{i=1,\ldots,s}$
based on
measured H.

S2510

CSI-RS

⋮

S2520

BS indicates (for the n-th time)
the number of feedback streams $S_n$.

UE calculates
$v_n = \sum_{i=S_{n-1}+1}^{S_n} \alpha_i q_i$.

S2530

CSI feedback signal $v_n = \sum_{i=S_{n-1}+1}^{S_n} \alpha_i q_i$
(※ $S_0 = 0$)

Decoder-side
(BS)

Encoder-side
(UE)

⋮

Decoder estimates $\hat{H}$
based on $\{v_j\}_{j=1,\ldots,n}$.

$\hat{H}$

【FIG. 26】

S2610

CSI-RS
⋮
CSI-RS

UE measures $H^{(t-1)}$ based on CSI-RS.

Encoder ouptuts $\{q_i^{(t-1)}\}_{i=1,\ldots,S}$ based on measured $H^{(t-1)}$.

$H$

UE measures $H^{(t)}$ based on CSI-RS.

Encoder ouptuts $\{q_i^{(t)}\}_{i=1,\ldots,S}$ based on measured $H^{(t)}$.

Decoder-side (BS)

S2620

UE indicates required feedback rate as $(S_{begin}, S_{end})$.

UE decides $S_{begin}$ and $S_{end}$ based on $\{q_i^{(t-1)}\}_{i=1,\ldots,S}$ and $\{q_i^{(t)}\}_{i=1,\ldots,S}$.

S2630

CSI feedback stream(s) $\{q_i \mid i \in \{S_{begin}, \ldots, S_{end}\}\}$ (※ $S_0 = 0$)

Encoder-side (UE)

Decoder estimates $\hat{H}^{(t)}$ based on $\{q_i^{(t-1)}\}_{i=1,\ldots,S_{begin}-1}$ and $\{q_i^{(t)}\}_{i=S_{begin}-1,\ldots,S_{end}}$

$\hat{H}$

【FIG. 27】

```
                         ( Start )
                             │
                             ▼
┌─────────────────────────────────────────────────────┐
│     Receive configuration information related to     │─── S2710
│          CSI report from base station                │
└─────────────────────────────────────────────────────┘
                             │
                             ▼
┌─────────────────────────────────────────────────────┐
│   Receive channel state information-reference signal │─── S2720
│            (CSI-RS) from base station                │
└─────────────────────────────────────────────────────┘
                             │
                             ▼
┌─────────────────────────────────────────────────────┐
│ Perform procedure for determining the number of information │─── S2730
│    streams related to CSI report with base station   │
└─────────────────────────────────────────────────────┘
                             │
                             ▼
┌─────────────────────────────────────────────────────┐
│           Transmit CSI to base station               │─── S2740
└─────────────────────────────────────────────────────┘
                             │
                             ▼
                         ( End )
```

【FIG. 28】

```
                          ( Start )
                              |
                              v
  +-----------------------------------------------------+
  | Transmit configuration information related to CSI   |---- S2810
  |                   report to UE                      |
  +-----------------------------------------------------+
                              |
                              v
  +-----------------------------------------------------+
  | Transmit channel state information-reference signal |---- S2820
  |                   (CSI-RS) to UE                    |
  +-----------------------------------------------------+
                              |
                              v
  +-----------------------------------------------------+
  | Perform procedure for determining the number of     |---- S2830
  | information streams related to CSI report with UE   |
  +-----------------------------------------------------+
                              |
                              v
  +-----------------------------------------------------+
  |              Receive CSI from UE                    |---- S2840
  +-----------------------------------------------------+
                              |
                              v
                          (  End  )
```

## INTERNATIONAL SEARCH REPORT

| International application No. |
|---|
| **PCT/KR2023/000571** |

| A. | CLASSIFICATION OF SUBJECT MATTER |
|---|---|

**H04B 7/06**(2006.01)i; **H04B 7/0417**(2017.01)i; **H04L 1/00**(2006.01)i; **G06N 3/0455**(2023.01)i

According to International Patent Classification (IPC) or to both national classification and IPC

| B. | FIELDS SEARCHED |
|---|---|

Minimum documentation searched (classification system followed by classification symbols)

H04B 7/06(2006.01); G06N 3/08(2006.01); H04B 17/24(2015.01); H04L 5/00(2006.01); H04W 28/06(2009.01); H04W 72/0457(2023.01); H04W 72/21(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보 보고(channel state information report), 채널 상태 정보 참조 신호 (channel state information reference signal: CSI-RS), 정보 스트림의 개수(number of information streams), CSI 파라미터(CSI parameter)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2015-0011354 A (SAMSUNG ELECTRONICS CO., LTD.) 30 January 2015 (2015-01-30) See paragraphs [0061]-[0062]; claims 1-3; and figure 6. | 1,7-15 |
| A | | 2-6 |
| Y | KR 10-2023-0005123 A (SAMSUNG ELECTRONICS CO., LTD.) 09 January 2023 (2023-01-09) See claims 1 and 9. | 1,7-15 |
| Y | KR 10-2022-0169322 A (SOGANG UNIVERSITY RESEARCH & BUSINESS DEVELOPMENT FOUNDATION) 27 December 2022 (2022-12-27) See paragraphs [0043]-[0044]; and figure 4. | 10 |
| A | US 2018-0191476 A1 (HUAWEI TECHNOLOGIES CO., LTD.) 05 July 2018 (2018-07-05) See paragraphs [0033]-[0055]; and figure 1. | 1-15 |

☑ Further documents are listed in the continuation of Box C.    ☑ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| **27 September 2023** | **04 October 2023** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/000571** |

| C. | DOCUMENTS CONSIDERED TO BE RELEVANT | |
| --- | --- | --- |
| Category* | Citation of document, with indication, where appropriate, of the relevant passages | Relevant to claim No. |
| A | 3GPP: TSG RAN; NR; Physical layer procedures for data (Release 17). 3GPP TS 38.214 V17.4.0. 04 January 2023.<br> See section 5.2. | 1-15 |

Form PCT/ISA/210 (second sheet) (July 2022)

## INTERNATIONAL SEARCH REPORT
### Information on patent family members

International application No.

**PCT/KR2023/000571**

| Patent document cited in search report | | | Publication date (day/month/year) | Patent family member(s) | | | Publication date (day/month/year) |
|---|---|---|---|---|---|---|---|
| KR | 10-2015-0011354 | A | 30 January 2015 | CN | 104350693 | A | 11 February 2015 |
| | | | | CN | 104350693 | B | 24 April 2018 |
| | | | | CN | 108512786 | A | 07 September 2018 |
| | | | | CN | 108512786 | B | 15 December 2020 |
| | | | | EP | 2665199 | A1 | 20 November 2013 |
| | | | | EP | 2665199 | B1 | 28 August 2019 |
| | | | | JP | 2015-520579 | A | 16 July 2015 |
| | | | | JP | 6203828 | B2 | 27 September 2017 |
| | | | | KR | 10-2019-0139325 | A | 17 December 2019 |
| | | | | KR | 10-2055332 | B1 | 12 December 2019 |
| | | | | KR | 10-2147682 | B1 | 25 August 2020 |
| | | | | US | 2013-0310100 | A1 | 21 November 2013 |
| | | | | US | 2016-0065389 | A1 | 03 March 2016 |
| | | | | US | 9184941 | B2 | 10 November 2015 |
| | | | | US | 9787504 | B2 | 10 October 2017 |
| | | | | WO | 2013-172684 | A1 | 21 November 2013 |
| KR | 10-2023-0005123 | A | 09 January 2023 | CN | 115486175 | A | 16 December 2022 |
| | | | | EP | 4108027 | A1 | 28 December 2022 |
| | | | | US | 11729653 | B2 | 15 August 2023 |
| | | | | US | 2021-0345148 | A1 | 04 November 2021 |
| | | | | WO | 2021-221491 | A1 | 04 November 2021 |
| KR | 10-2022-0169322 | A | 27 December 2022 | KR | 10-2530976 | B1 | 11 May 2023 |
| US | 2018-0191476 | A1 | 05 July 2018 | CN | 107925506 | A | 17 April 2018 |
| | | | | CN | 107925506 | B | 15 December 2020 |
| | | | | CN | 112491503 | A | 12 March 2021 |
| | | | | CN | 112491503 | B | 22 April 2022 |
| | | | | EP | 3322115 | A1 | 16 May 2018 |
| | | | | EP | 3322115 | A4 | 01 August 2018 |
| | | | | JP | 2018-529264 | A | 04 October 2018 |
| | | | | JP | 6745870 | B2 | 26 August 2020 |
| | | | | US | 10411865 | B2 | 10 September 2019 |
| | | | | US | 11101960 | B2 | 24 August 2021 |
| | | | | US | 2019-0334683 | A1 | 31 October 2019 |
| | | | | WO | 2017-028058 | A1 | 23 February 2017 |

Form PCT/ISA/210 (patent family annex) (July 2022)